(19) **Europäisches Patentamt**
**European Patent Office**
**Office européen des brevets**

(11) **EP 4 603 810 A1**

(12) **EUROPÄISCHE PATENTANMELDUNG**

(43) Veröffentlichungstag:
20.08.2025 Patentblatt 2025/34

(21) Anmeldenummer: 24157501.8

(22) Anmeldetag: 14.02.2024

(51) Internationale Patentklassifikation (IPC):
G01J 3/46 (2006.01)    G01J 3/10 (2006.01)
G01M 11/02 (2006.01)    G01M 17/00 (2006.01)

(52) Gemeinsame Patentklassifikation (CPC):
G01J 3/462; G01J 3/465; G01J 3/50; G01J 3/524;
G01J 2003/102

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Lisa Dräxlmaier GmbH
84137 Vilsbiburg (DE)

(72) Erfinder:
• Heßke, Andreas
84041 Essenbach (DE)
• Sollfrank, Fritz
84100 Niederaichbach (DE)

(54) **VERFAHREN ZUM BESTIMMEN EINER ABBILDUNG EINES ERSTEN FARBRAUMS EINER PRÜFKAMERA AUF EINEN ZWEITEN FARBRAUM EINES SPEKTROMETERS**

(57) Die Offenbarung betrifft ein Verfahren (100) zum Bestimmen einer Abbildung eines ersten Farbraums (R, G, B) einer Prüfkamera (K) auf einen zweiten Farbraum (X, Y, Z) eines Spektrometers (S) für die Prüfung einer Fahrzeugkomponente (P) in dem zweiten Farbraum (X, Y, Z), wobei das Verfahren (100) folgende Schritte umfasst: Ansteuern einer Anordnung aus einer Mehrzahl von Lichtquellen zur Erzeugung eines Satzes von vordefinierten Farbspektren; Erfassen des Satzes von vordefinierten Farbspektren mit einem Spektrometer (S) in dem zweiten Farbraum (X, Y, Z); Erfassen des Satzes von vordefinierten Farbspektren mit der Prüfkamera (K) in dem ersten Farbraum (R, G, B); Bestimmen einer Abbildung des ersten Farbraums auf den zweiten Farbraum basierend auf den erfassten Sätzen von vordefinierten Farbspektren in dem zweiten Farbraum (X, Y, Z) und in dem ersten Farbraum (R, G, B); und Anwenden der Abbildung auf die Prüfkamera (K) zum Prüfen der Fahrzeugkomponente (P) in dem zweiten Farbraum (X, Y, Z).

Fig. 1

## Beschreibung

### Technisches Gebiet

Die vorliegende Erfindung betrifft ein Verfahren und ein Prüfsystem zum Bestimmen einer Abbildung eines ersten Farbraums einer Prüfkamera auf einen zweiten Farbraum eines Spektrometers für die Prüfung einer Fahrzeugkomponente in dem zweiten Farbraum. Die Erfindung betrifft insbesondere ein prüfanlagenintegriertes System zur Transformationsmatrixerzeugung RGB-zu-XYZ für kamerabasierte Prüfsysteme; einen Farb- und Helligkeitsabgleich für Farb-Kameras durch spektral-prüflingsnahes Lichtelement; und einen Farb- und Helligkeitsabgleich für Farb-Kameras während der Bauteilprüfung.

### Stand der Technik

Rohdatenwerte von RGB-Bildsensoren (z.B. Kameras) können in standardisierte Farbmodelle, bzw. in das Normvalenzsystem, über lineare Matrixberechnungen umgerechnet werden. Dies erfolgt über festgelegte Matrizen je Farbmodell und zu messender Lichtart. In der Regel werden spektral breitbandige Normlichtarten wie D65, D50 für die standardisierten Umrechnungsmatrizen verwendet. Zu messende, spektral-individuelle Lichtquellen werden dabei nicht näher berücksichtigt und bei der Umrechnung von den RGB-Rohdaten in z.B. das Normvalenzsystem können je nach zu messender Lichtquelle erhöhte Fehler bei der Umrechnung entstehen. Farb-Leuchtdichtekameras bieten auch die Möglichkeit einer bildgebenden Normvalenzsystem-Wertedarstellung, jedoch sind auch diese in der Regel auf Normlichtarten kalibriert und durch die Verwendung von festen Farbfiltern einerseits spektral eingeschränkt, was die Messgenauigkeit vermindert, wie auch durch die mechanische Bewegung der Filter über den Kamera-Bildsensor langsam in der Messzeit (teils > 1 s). Zudem sind sie komplex aufgebaut und daher äußerst kostenintensiv.

### Beschreibung der Erfindung

Eine Aufgabe der Erfindung ist es daher, ein Konzept zum Prüfen von Prüflingen, insbesondere Fahrzeugkomponenten, zu schaffen, das sich aufgrund von einfach realisierbaren und daher kostengünstigen Systemkomponenten für die Serienprüfung eignet. Insbesondere ist es eine Aufgabe, ein Verfahren und ein Prüfsystem zu schaffen, das mit einfach aufgebauten Standard-Farb-Industriekameras eine Umrechnung von RGB-Rohdaten ins Normvalenzsystem schafft.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, eine Standard-Farb-Industriekamera zusammen mit einem Spektrometer zu nutzen, um mit den so erfassten Farbspektren eine Abbildung eines ersten Farbraumes auf einen zweiten Farbraum zu bestimmen. Die erfinderische Lösung basiert auf der Zusammenfassung von drei Teilaspekten, wie im Folgenden näher dargestellt.

Ein erster Teilaspekt der Erfindung bezieht sich auf ein prüfanlagenintegriertes System zur Transformationsmatrixerzeugung RGB-zu-XYZ für kamerabasierte Prüfsysteme.

Der erste Teilaspekt der Erfindung betrifft automatisierte Verfahren mit Umrechnung der Rohdatenwerte von Standard-Farb-Industriekameras in physikalische Größen zur photometrischen Helligkeitsempfindung und standardisierten Farbmodellen (Normvalenzsystem, CIE 1931 XYZ, CIELUV) mit hinreichender Genauigkeit. Hier treten die folgenden Probleme auf, welche durch die Erfindung gelöst werden: Werte je nach Farbmodell können nur exakt über Spektren berechnet werden. Spektrometer sind jedoch nicht bildgebend. Bildgebende Systeme wie zum Beispiel Kameras sind spektral unzureichend auflösend (Farb-Kamera, selbst Multi- oder Hyperspektral-Kameras). Standard-Farb-Industriekameras besitzen für jeden Pixel in der Regel drei Intensitätswerte (R, G, B), die die darin abgebildete kameratypische Bestrahlungsstärke für drei Spektralbereiche (optische Filter für "Rot", "Grün", "Blau") darstellt. Diese RGB-Werte sind aufgrund der kameraspezifisch genutzten optischen Filter, Objektive, etc. nicht ohne weiteres direkt umrechenbar in physikalische/photometrische Größen oder Farbmodelle. Es muss eine individuelle Umrechnungsmatrix bestimmt werden. Die hier vorgestellte Erfindung schafft eine Lösung für diese Probleme.

Mit dem hier vorgestellten erfindungsgemäßen Verfahren und Prüfsystem werden automatisiert photometrische Messdaten mit einem Spektrometer und Kamerarohdaten gesammelt. Damit wird eine individuelle, lineare Verrechnungsmatrix für RGB-Daten zu photometrischen Daten bestimmt.

Die Aufnahme dieser Messdaten erfolgt über einen Satz an definierten Lichtspektren, die über eine ansteuerbare Lichtbox realisierbar wird. Mit Lichtquellen, wie beispielsweise LEDs, die im visuellen Bereich, je nach LED-Typ, eine Vielzahl von schmalbandigen Spektren besitzen, kann dieser Satz von definierten Lichtspektren hergestellt werden.

Das hier vorgestellte System beschreibt eine Einheit, die sich beispielsweise komplett in einer Inline-Serienprüfstation befinden kann, und die für die zur Serienprüfung eingesetzten Farb-Industriekameras in einem regelmäßigen Zyklus eine Umrechnungsmatrix von Kamera-RGB-Rohdaten ins Normvalenzsystem bestimmen kann.

Dies ermöglicht den Einsatz eines preislich attraktiven, bildgebenden Prüfsystems mit Standard-Farb-Industriekameras, das standardisierte Messwerte im Normvalenzsystem als Bild liefern kann. So können entsprechend OEM-Zielvorgaben in dieser Serienprüfstation lichttechnische Bauteile gemessen werden.

Da sich nur die Kameras im Produktprüfbereich befinden, wird keine Produktionsunterbrechung während Wartungsintervallen der Lichtbox nötig sein. Selbst bei komplettem Ausfall der Lichtbox ist die Prüfstation noch in der Lage, mit den Kameras weiterhin Produkte zu messen.

So ist es möglich, bekannte, standardisierte Kameras zu verwenden, um nicht nur Prüfungen an Bauteilen durchzuführen, sondern im Normvalenzsystem zu messen. Die Kameramesswerte können ohne weitere Produktprüfzykluszeiterhöhung generiert werden. Die Umrechnungsmatrizen sind produktindividuell erstellbar, um entsprechende Messgenauigkeit im zu erwartenden Messbereich zu erzielen.

Die eingesetzten, kostengünstigen Farb-Industriekameras mit entsprechender Umrechnungsmatrix bieten die Möglichkeit, auf das zu messende Lichtprodukt individuell eingestellt zu werden und mit sehr kurzen Messzeiten (<< 0,5 s) Messwerte im Normvalenzsystem zu bestimmen. Zudem können ausgewählte Standardkomponenten, wie zum Beispiel Industriekameras, Objektive, etc. verwendet werden, die am Markt schnell verfügbar bzw. durch äquivalente Komponenten austauschbar sind.

Der zweite Teilaspekt der Erfindung bezieht sich auf einen Farb- und Helligkeitsabgleich für Farb-Kameras durch ein spektral-prüflingsnahes Lichtelement. Hier treten die folgenden Probleme auf, welche durch die Erfindung gelöst werden: Es wird ein Farb- und Helligkeitsabgleich für mehrere, anlagenfixierte Farbkameras bei Vermessung von Ambiente-Lichtprodukten mit RGB-LEDs (Rot, Grün, Blau) benötigt. Eine Bauteilprüfung sollte im Normvalenzsystem ($X$-, $Y$-, $Z$-Farbwerte) bzw. im CIELUV-Farbraum (nach CIE 1976 mit Leuchtdichte $L,$ Farbkoordinaten $u'$ und $v'$) stattfinden. Der Farb- und Helligkeitsabgleich sollte (teil-) automatisiert in Prüfanlage stattfinden. Die hier vorgestellte Erfindung schafft eine Lösung für diese Probleme.

Mit dem hier vorgestellten erfindungsgemäßen Verfahren und Prüfsystem werden ein fixiertes Spektrometer und eine fixierte Farbkamera (Kamera 1) bereitgestellt, die denselben Erfassungsbereich ("Position 1") haben. Beide vermessen (nahezu) zeitgleich ein eigens entwickeltes Lichtelement (RGB-LED-Lichtquelle, "Kalibrierlichtquelle"), das in "Position 1" eingebracht wird. Es können Spektrometer-Messwerte im Normvalenzsystem ($X_{\text{Spec}}$, $Y_{\text{Spec}}$, $Z_{\text{Spec}}$) sowie Kamera-Werte im Kamera-RGB-Farbraum ($R_{\text{Cam}}$, $G_{\text{Cam}}$, $B_{\text{cam}}$) erfasst werden. Kamera 1 kann mit einer "Kalibriersequenz" auf das Spektrometer abgeglichen werden. Die "Kalibrierlichtquelle" kann dann auf die nächste Kamera (Kamera 2) verfahren ("Position 2") werden. Die Vermessung der "Kalibrierlichtquelle" kann dann mit Kamera 2 erfolgen. Ein Abgleich von Kamera 2 kann mit Messwerten des Spektrometers, die bei "Position 1" ermittelt wurden, erfolgen. Danach kann die "Kalibrierlichtquelle" auf die nächste Kamera (Kamera 3) verfahren ("Position 3") werden und es kann eine Vermessung der "Kalibrierlichtquelle" mit Kamera 3 erfolgen. Ein Abgleich von Kamera 3 kann mit Messwerten des Spektrometers, die bei "Position 1" ermittelt wurden, erfolgen.

Eine analoge Wiederholung kann für weitere Kameras ("Position 4", "Position 5", ...) erfolgen. Schließlich kann ein Rückführen der "Kalibrierlichtquelle" zu "Position 1" und eine Kontrollmessung mit dem Spektrometer erfolgen, um zu prüfen, ob Veränderungen an der "Kalibrierlichtquelle" während des Abgleichs aller Kameras auftraten.

Das hier vorgestellte System beschreibt eine Einheit, die sich beispielsweise komplett in einer Inline-Serienprüfstation befinden kann, und die für die zur Serienprüfung eingesetzten Farb-Industriekameras in einem regelmäßigen Zyklus eine Umrechnungsmatrix von Kamera-RGB-Rohdaten ins Normvalenzsystem bestimmen kann.

Dies ermöglicht den Einsatz eines preislich attraktiven, bildgebenden Prüfsystems mit Standard-Farb-Industriekameras, das standardisierte Messwerte im Normvalenzsystem als Bild liefern kann. So können entsprechend OEM-Zielvorgaben in dieser Serienprüfstation lichttechnische Bauteile gemessen werden.

Da sich nur die Kameras im Produktprüfbereich befinden, ist keine Produktionsunterbrechung während Wartungsintervallen des Spektrometers bzw. der "Kalibrierlichtquelle" notwendig. Selbst bei komplettem Ausfall des Spektrometers oder/und der "Kalibrierlichtquelle" ist die Prüfstation noch in der Lage, mit den Kameras weiterhin Produkte zu messen und zu prüfen.

So ist es möglich, bekannte, standardisierte Kameras zu verwenden, um nicht nur Prüfungen an Bauteilen durchzuführen, sondern im Normvalenzsystem zu messen. Die Kameramesswerte können ohne weitere Produktprüfzykluszeiterhöhung generiert werden. Die Umrechnungsmatrizen sind produktindividuell erstellbar, um entsprechende Messgenauigkeit im zu erwartenden Messbereich zu erzielen.

Die eingesetzten, kostengünstigen Farb-Industriekameras mit entsprechender Umrechnungsmatrix bieten die Möglichkeit, auf das zu messende Lichtprodukt individuell eingestellt zu werden und mit sehr kurzen Messzeiten (<< 0,5 s) Messwerte im Normvalenzsystem zu bestimmen. Zudem können ausgewählte Standardkomponenten, zum Beispiel Industriekameras, Objektive, etc., verwendet werden, die am Markt schnell verfügbar bzw. durch äquivalente Komponenten austauschbar sind.

Die eigens entwickelte "Kalibrierlichtquelle" beinhaltet baugleiche Leuchtelemente, zum Beispiel RGB-LEDs, wie das zu prüfende Produkt und kann gleich dem zu prüfenden Produkt angesteuert werden. Daher entsteht kein Mehraufwand in Verkabelung, Ansteuerung, etc. durch die "Kalibrierlichtquelle".

Der dritte Teilaspekt der Erfindung bezieht sich auf einen Farb- und Helligkeitsabgleich für Farb- Kameras während der Bauteilprüfung. Hier treten die folgenden Probleme auf, welche durch die Erfindung gelöst werden: Es wird ein Farb- und Helligkeitsabgleich von einem punktförmig messenden Spektrometer (bzw. Spektroradiometer) zu einer flächig detektierenden Farbkamera durchgeführt. Mit der abgeglichen Farbkamera kann so im Kamerabild jeder Bereich frei vermessen werden, und zwar nicht nur punktuell, sondern z.B. flächig oder linienförmig. Die zu untersuchenden Leuchtelemente sind beispielsweise RGB-LEDs (Rot, Grün, Blau), die spektral im jeweiligen Farbkanal leicht schwanken können (sogenannte Farb-Binning-Variation). Daher entstehen bei einem allgemeinen, nicht auf das LED-Farb-Binning abgestimmten, Kamera-Abgleich (Mess-) Fehler, die minimiert/vermieden werden sollten. Es sollte mindestens eine oder mehrere RGB-LEDs vermessen werden. Die hier vorgestellte Erfindung schafft eine Lösung für diese Probleme.

Mit dem hier vorgestellten erfindungsgemäßen Verfahren und Prüfsystem kann jede der Grundfarben (Rot, Grün, Blau) der RGB-LEDs (nahezu) zeitgleich mit dem Spektrometer und der Farbkamera vermessen werden. Der Messpunkt des Spektrometers befindet sich im Bildbereich der Farbkamera. Es können so mehrere Kamerapixel auf den Spektrometermesspunkt bezogen werden. Die Messdaten des Spektrometermesspunktes können mit den Intensitätswerten der Pixel-Farbkanäle der Farbkamera verrechnet werden und für jede RGB-LED so eine eigene Umrechnungsmatrix "Kamerawerte-zu-Spektrometerwerte" bestimmt werden. Es können so Kamera-RGB-Rohdaten ins Normvalenzsystem ($X$-, $Y$-, $Z$-Farbwerte) und entsprechend weitere Farbumrechnungen ermöglicht werden. Diese Farbinformationen können beispielsweise für weitere Bauteilproduktionsschritte und -prüfungen notwendig sein. Bei Vermessung mehrerer RGB-LEDs sollte entweder das System "Spektrometer mit Kamera" verschiebbar sein oder es sollte sich ein Messpunkt ergeben, der von allen RGB-LEDs Lichtinformationen enthält. In dieser Offenbarung wird der letztere Fall betrachtet.

Das hier vorgestellte System beschreibt eine Einheit, die sich beispielsweise komplett in einer Inline-Serienprüfstation befinden kann. Mit den für die zur Serienprüfung eingesetzten Farb-Industriekameras kann jeder Prüfung einer RGB-LED eine Umrechnungsmatrix von Kamera-RGB-Rohdaten ins Normvalenzsystem bestimmt werden. Die Umrechnung der Kamera-RGB-Werte ist daher präziser als vorkalibrierte Messysteme gemäß dem Stand der Technik und kann so bildgebend Farbinformationen mit annähernd derselben Genauigkeit wie Spektrometer liefern.

Dies ermöglicht den Einsatz eines preislich attraktiven, bildgebenden Prüfsystems mit Standard-Farb-Industriekamera und Spektroradiometer, welches standardisierte Messwerte im Normvalenzsystem als Bild liefern kann. So können entsprechend OEM-Zielvorgaben in dieser Serienprüfstation lichttechnische Bauteile gemessen und geprüft werden.

Dadurch können hochqualitativ und sehr variabel lichttechnische Bauteilprüfungen durchgeführt werden. Durch den Einsatz von Standard-RGB-Industriekameras mit einem zusätzlichen Spektroradiometer sowie frei programmierbarer Bildauswertesoftware und der unten beschriebenen Messabfolge kann das Messsystem selbst umgesetzt werden, ohne andere, teure Systeme zu integrieren.

Der in dieser Offenbarung beschriebene dritte Teilaspekt der Erfindung bietet insbesondere die folgenden technischen Vorteile:

Die freie Wahl von Standard-RGB-Industriekameras bietet den Vorteil von Markt- und Verfügbarkeits-Unabhängigkeit. So kann je nach Lieferfähigkeit, Preis und technischen Anforderungen jede RGB-Kamera verwendet werden. Zudem können bekannte Standardkomponenten, wie zum Beispiel Industriekameras, Objektive, etc., verwendet werden, die durch äquivalente Komponenten austauschbar sind.

Da die Kameras und das Spektroradiometer zwar fest zueinander in der Prüfanlage angeordnet sind, aber nicht fest miteinander verbaut sind, können sie jeweils frei ausgebaut und gewechselt werden. Das spielt vor allem beim Ausbau des Spektroradiometers bei der jährlichen Kalibrierroutine eine wichtige Rolle. Die RGB-Industriekamera muss dabei nicht in ihrer Lage verändert werden. Aufwändiges Nachjustieren kann minimiert werden. Das vereinfacht diese Routine. Durch eine mögliche "Dummy-Kalibrierung" der Kamera kann die Kamera auch ohne Spektroradiometer frei arbeiten. So kann die Prüfanlage ein fehlendes bzw. defektes Spektroradiometer "kompensieren". Das bedeutet allerdings einen gewissen Genauigkeitsverlust.

Das Messsystem (Kamera+Spektroradiometer) kann Produkt-Farbschwankungen (wie LED-Farb-Binnig) kompensieren und die Messgenauigkeit halten. So ist es auch möglich, andere LED-Typen mit demselben Messsystem zu verwenden, ohne die Messgenauigkeit zu verlieren (z.B. bei Produkt-Update oder weitere Derivate).

Die Messungen der Kamera und des Spektroradiometers können zeitsynchron erfolgen und ermöglichen deshalb sehr kurze Messzeiten (< 0,5 s) mit Messwerten im Normvalenzsystem.

Inhomogenitäten im Messpunkt wirken sich minimal auf das Gesamtergebnis aus, wenn die Voraussetzung erfüllt ist, dass der Spektroradiometermesspunkt vollkommen im Kamerabild darstellbar ist. Das wird jedoch meist bei der Ersteinrichtung durchgeführt und kann so sichergestellt werden. Selbst Bauteilpositionsschwankungen während der Messung sind unkritisch, solange (annähernd) zeitgleich derselbe Messfleck mit Kamera und Spektroradiometer ausgewertet wird.

Bei mehreren LEDs, die vermessen werden sollen, spielt es keine Rolle, ob sie farblich variieren (LED-Farb-Binning), da für jede der RGB-LEDs eine eigene Umrechnungsmatrix "Kamera-zu-Spektroradiometerwerten" durchgeführt werden kann.

Gemäß einem ersten Aspekt wird die oben beschriebene Aufgabe gelöst durch ein Verfahren zum Bestimmen einer Abbildung eines ersten Farbraums (zum Beispiel R, G, B) einer Prüfkamera auf einen zweiten Farbraum (zum Beispiel X, Y, Z) eines Spektrometers für die Prüfung eines Prüflings, insbesondere einer Fahrzeugkomponente, in dem zweiten Farbraum, wobei das Verfahren folgende Schritte umfasst: Ansteuern einer Anordnung aus einer Mehrzahl von Lichtquellen zur Erzeugung eines Satzes von vordefinierten Farbspektren; Erfassen des Satzes von vordefinierten Farbspektren mit einem Spektrometer in dem zweiten Farbraum; Erfassen des Satzes von vordefinierten Farbspektren mit der Prüfkamera in dem ersten Farbraum; Bestimmen einer Abbildung des ersten Farbraums auf den zweiten Farbraum basierend auf den erfassten Sätzen von vordefinierten Farbspektren in dem zweiten Farbraum und in dem ersten Farbraum; und Anwenden der Abbildung auf die Prüfkamera zum Prüfen der Fahrzeugkomponente in dem zweiten Farbraum.

Ein solches Verfahren erlaubt das Prüfen von Fahrzeugkomponenten und eignet sich aufgrund von einfach realisierbaren und daher kostengünstigen Systemkomponenten für die Serienprüfung. Dieses Verfahren schafft mit einfach aufgebauten Standard-Farb-Industriekameras eine Umrechnung von RGB-Rohdaten ins Normvalenzsystem.

Dabei wird eine Standard-Farb-Industriekamera zusammen mit einem Spektrometer genutzt, um mit den so erfassten Farbspektren eine Abbildung eines ersten Farbraumes, z.B. RGB der Kamera, auf einen zweiten Farbraum, z.B. Normvalenzsystem, zu bestimmen.

Gemäß einem zweiten Aspekt wird die oben beschriebene Aufgabe gelöst durch ein Prüfsystem zum Bestimmen einer Abbildung eines ersten Farbraums (zum Beispiel R, G, B) einer Prüfkamera auf einen zweiten Farbraum (zum Beispiel X, Y, Z) eines Spektrometers für die Prüfung eines Prüflings, insbesondere einer Fahrzeugkomponente, in dem zweiten Farbraum, wobei das Prüfsystem folgendes umfasst: eine Anordnung aus einer Mehrzahl von Lichtquellen, welche ausgebildet ist, einen Satz von vordefinierten Farbspektren zu erzeugen; ein Spektrometer, das ausgebildet ist, den Satz von vordefinierten Farbspektren in dem zweiten Farbraum zu erfassen; eine Prüfkamera, die ausgebildet ist, den Satz von vordefinierten Farbspektren in dem ersten Farbraum zu erfassen; und einen Steuerrechner, der ausgebildet ist, eine Abbildung des ersten Farbraums auf den zweiten Farbraum basierend auf den erfassten Sätzen von vordefinierten Farbspektren in dem zweiten Farbraum und in dem ersten Farbraum zu bestimmen; und die Abbildung auf die Prüfkamera zum Prüfen der Fahrzeugkomponente in dem zweiten Farbraum anzuwenden.

Genau wie das Verfahren erlaubt auch das dazu analoge Prüfsystem das Prüfen von Fahrzeugkomponenten und eignet sich aufgrund seiner einfach realisierbaren und daher kostengünstigen Systemkomponenten besonders gut für die Serienprüfung. Das Prüfsystem schafft mit einfach aufgebauten Standard-Farb-Industriekameras eine Umrechnung von RGB-Rohdaten ins Normvalenzsystem. Dabei wird eine Standard-Farb-Industriekamera zusammen mit einem Spektrometer genutzt, um mit den so erfassten Farbspektren eine Abbildung eines ersten Farbraumes, z.B. RGB der Kamera, auf einen zweiten Farbraum, z.B. Normvalenzsystem, zu bestimmen.

Die folgenden Ausführungsformen des Verfahrens bzw. Prüfsystems beziehen sich auf den oben beschriebenen ersten Teilaspekt der Erfindung.

Gemäß einer beispielhaften Ausführungsform des Verfahrens oder Prüfsystems ist der erste Farbraum ein Farbraum einer 3-Kanal Farbbildkamera zur Erzeugung von drei Farbkanälen (zum Beispiel R, G, B); und der zweite Farbraum ist ein Normalbetrachter-Farbraum (zum Beispiel X, Y, Z).

Damit kann der erste Farbraum dem Farbraum einer einfach zu beschaffenden 3-Kanal Farbbildkamera entsprechen und der zweite Farbraum kann dem Normalbetrachter-Farbraum (X, Y, Z) entsprechen, der eine vorteilhafte Wahrnehmung durch den menschlichen Betrachter liefert.

Gemäß einer beispielhaften Ausführungsform des Verfahrens oder Prüfsystems umfasst das Verfahren oder Prüfsystem den folgenden Schritt: Positionieren der Anordnung aus der Mehrzahl von Lichtquellen in einem vorgegebenen Abstand zu der Prüfkamera; wobei der vorgegebene Abstand zu der Prüfkamera einem Abstand zu der von der Prüfkamera zu prüfenden Fahrzeugkomponente entspricht.

Damit ergibt sich der Vorteil, dass die Prüfkamera im gleichen Abstand zu der Mehrzahl von Lichtquellen kalibriert bzw. justiert wird, wie er auch im Prüfsystem als Abstand zur Fahrzeugkomponente auftritt. Die Justierung bzw. Kalibrierung kann also sehr genau erfolgen.

Gemäß einer beispielhaften Ausführungsform des Verfahrens oder Prüfsystems ist die Anordnung aus der Mehrzahl von Lichtquellen in einer Ulbricht-Kugel untergebracht, welche eine Lichtaustrittsfläche aufweist, aus der Licht entsprechend dem von den Lichtquellen erzeugten Satz vordefinierter Farbspektren austritt.

Eine solche Ulbricht-Kugel erlaubt es, gerichtete Strahlung in diffuse Strahlung umzusetzen oder um die Strahlung divergenter Quellen zu sammeln.

Gemäß einer beispielhaften Ausführungsform des Verfahrens oder Prüfsystems sind die Ulbricht-Kugel und das Spektrometer in einer Lichtbox untergebracht; und das Spektrometer ist mit der Ulbricht-Kugel und der Lichtaustrittsfläche der Ulbricht-Kugel kalibriert.

Damit kann ein besonders kompakter Aufbau erzielt werden, mit dem eine genaue Justierung der Kamera erreicht werden kann.

Gemäß einer beispielhaften Ausführungsform des Verfahrens oder Prüfsystems umfasst die Lichtbox ein Lichtquellentreibermodul zum Ansteuern der Anordnung aus der Mehrzahl von Lichtquellen; und die Erzeugung des Satzes von vordefinierten Farbspektren erfolgt basierend auf einer Ansteuerung des Lichtquellentreibermoduls mit einem Steuerrechner.

Über den Steuerrechner kann die Lichtbox einfach angesteuert werden.

Gemäß einer beispielhaften Ausführungsform des Verfahrens oder Prüfsystems wird die Abbildung des ersten Farbraums auf den zweiten Farbraum durch eine Transformationsmatrix T dargestellt.

Mit einer solchen Transformationsmatrix kann eine einfache Umrechnung des ersten Farbraums in den ersten Farbraum und umgekehrt vorgenommen werden.

Gemäß einer beispielhaften Ausführungsform des Verfahrens oder Prüfsystems wird der erfasste Satz von vordefinierten Farbspektren in dem zweiten Farbraum durch eine Spektrometer-Matrix $\boldsymbol{S}$ dargestellt; wird der erfasste Satz von vordefinierten Farbspektren in dem ersten Farbraum durch eine Kamera-Matrix $\boldsymbol{K}$ dargestellt; und bestimmt sich die Transformationsmatrix $\boldsymbol{T}$ über die Matrix-Beziehung $\boldsymbol{T} = (\boldsymbol{S}^T \cdot \boldsymbol{K}) \cdot (\boldsymbol{K}^T \cdot \boldsymbol{K})^{-1}$.

Damit existiert eine einfache Beziehung zur Umformung des ersten Farbraums in den ersten Farbraum und umgekehrt.

Die folgenden Ausführungsformen des Verfahrens bzw. Prüfsystems beziehen sich auf den oben beschriebenen zweiten Teilaspekt der Erfindung.

Gemäß einer beispielhaften Ausführungsform des Verfahrens oder Prüfsystems ist die Prüfkamera eine erste Prüfkamera einer Mehrzahl von Prüfkameras; und die Anordnung aus der Mehrzahl von Lichtquellen ist eine Referenzlichtquelle.

Mit einem solchen System aus mehreren Prüfkameras kann eine besonders gute Auflösung für jede Kamera des Kamerasystems erreicht werden.

Gemäß einer beispielhaften Ausführungsform des Verfahrens oder Prüfsystems umfasst das Verfahren ein Anordnen der Referenzlichtquelle in einer ersten Position, wobei in der ersten Position der Referenzlichtquelle die erste Prüfkamera und das Spektrometer Licht aus einer Lichtaustrittsfläche der Referenzlichtquelle empfangen.

Dies bietet den Vorteil, dass die erste Prüfkamera und das Spektrometer einen gemeinsamen Messfleck auf der homogen ausgestrahlten Referenzlichtquelle haben, so dass sich ihre jeweiligen Spektren ineinander umrechnen lassen.

Gemäß einer beispielhaften Ausführungsform des Verfahrens oder Prüfsystems umfasst das Verfahren: Darstellen des erfassten Satzes von vordefinierten Farbspektren in dem zweiten Farbraum des Spektrometers durch eine Spektrometer-Matrix $\boldsymbol{S}_{\mathrm{Pos1}}$ in Bezug auf die erste Position der Referenzlichtquelle; Darstellen des erfassten Satzes von vordefinierten Farbspektren in dem ersten Farbraum der ersten Prüfkamera durch eine erste Kamera-Matrix $\boldsymbol{K}_{\mathrm{K1}}$ in Bezug auf die erste Position der Referenzlichtquelle; und Bestimmen der Transformationsmatrix $\boldsymbol{T}_{\mathrm{K1}}$ der ersten Prüfkamera in Bezug auf die erste Position der Referenzlichtquelle über die Matrix-Beziehung

$$\boldsymbol{T}_{\mathrm{K1}} = \left(\boldsymbol{S}_{\mathrm{Pos1}}^{\mathrm{T}} \cdot \boldsymbol{K}_{\mathrm{K1}}\right) \cdot \left(\boldsymbol{K}_{\mathrm{K1}}^{\mathrm{T}} \cdot \boldsymbol{K}_{\mathrm{K1}}\right)^{-1}.$$

Damit existiert eine einfache Beziehung zur Umformung des ersten Farbraums in den ersten Farbraum und umgekehrt.

Gemäß einer beispielhaften Ausführungsform des Verfahrens oder Prüfsystems umfasst das Verfahren: Anordnen der Referenzlichtquelle in einer zweiten Position, wobei in der zweiten Position der Referenzlichtquelle eine zweite Prüfkamera der Mehrzahl von Prüfkameras und das Spektrometer Licht aus einer Lichtaustrittsfläche der Referenzlichtquelle empfangen.

So können nach und nach alle Positionen mit der Referenzlichtquelle angefahren werden, um die entsprechenden Prüfkameras zu kalibrieren bzw. zu justieren.

Gemäß einer beispielhaften Ausführungsform des Verfahrens oder Prüfsystems umfasst das Verfahren: Darstellen des erfassten Satzes von vordefinierten Farbspektren in dem ersten Farbraum der zweiten Prüfkamera durch eine zweite Kamera-Matrix $\boldsymbol{K}_{\mathrm{K2}}$ in Bezug auf die zweite Position der Referenzlichtquelle; und Bestimmen der Transformationsmatrix $\boldsymbol{T}_{\mathrm{K2}}$ der zweiten Prüfkamera in Bezug auf die zweite Position der Referenzlichtquelle über die Matrix-Beziehung

$$\boldsymbol{T}_{\mathrm{K2}} = \left(\boldsymbol{S}_{\mathrm{Pos1}}^{\mathrm{T}} \cdot \boldsymbol{K}_{\mathrm{K2}}\right) \cdot \left(\boldsymbol{K}_{\mathrm{K2}}^{\mathrm{T}} \cdot \boldsymbol{K}_{\mathrm{K2}}\right)^{-1}.$$

Wie schon oben beschrieben, existiert damit eine einfache Beziehung zur Umformung des ersten Farbraums in den ersten Farbraum und umgekehrt.

Gemäß einer beispielhaften Ausführungsform des Verfahrens oder Prüfsystems umfasst das Verfahren: Anordnen der Referenzlichtquelle in weiteren Positionen, wobei in den weiteren Positionen der Referenzlichtquelle jeweils eine weitere Prüfkamera der Mehrzahl von Prüfkameras und das Spektrometer Licht aus einer Lichtaustrittsfläche der Referenzlichtquelle empfangen; und Bestimmen der jeweiligen Transformationsmatrizen $\boldsymbol{T}_{\mathrm{K}i}$ der weiteren Prüfkameras in Bezug auf die jeweils weiteren Positionen der Referenzlichtquelle über die jeweilige Matrix-Beziehung

$$\boldsymbol{T}_{\mathrm{K}i} = \left(\boldsymbol{S}_{\mathrm{Pos1}}^{\mathrm{T}} \cdot \boldsymbol{K}_{\mathrm{K}i}\right) \cdot \left(\boldsymbol{K}_{\mathrm{K}i}^{\mathrm{T}} \cdot \boldsymbol{K}_{\mathrm{K}i}\right)^{-1}.$$

Wie schon oben beschrieben, existiert damit eine einfache Beziehung zur Umformung des ersten Farbraums in den ersten Farbraum und umgekehrt.

Gemäß einer beispielhaften Ausführungsform des Verfahrens oder Prüfsystems umfasst das Verfahren: nach dem Anordnen der Referenzlichtquelle in den weiteren Positionen, Anordnen der Referenzlichtquelle in der ersten Position; und Darstellen des erfassten Satzes von vordefinierten Farbspektren in dem zweiten Farbraum des Spektrometers durch eine Kontroll-Spektrometer-Matrix $S_{pos1,Kontrolle}$ in Bezug auf die erste Position der Referenzlichtquelle.

Dies bietet den Vorteil, dass ein Abgleich stattfinden kann, über den geprüft werden kann, ob sich die Umgebung während des Verfahrens der Referenzlichtquelle geändert hat.

Gemäß einer beispielhaften Ausführungsform des Verfahrens oder Prüfsystems umfasst das Verfahren: Anzeigen eines Fehlers, falls eine Abweichung der Kontroll-Spektrometer-Matrix $S_{Pos1,Kontrolle}$ von der Spektrometer-Matrix $S_{Pos1}$ einen Schwellwert überschreitet.

Ein Fehler lässt sich hiermit effizient bestimmen und anzeigen, um den Nutzer zu warnen, dass sich an der Prüfumgebung etwas geändert hat.

Die folgenden Ausführungsformen des Verfahrens bzw. Prüfsystems beziehen sich auf den oben beschriebenen dritten Teilaspekt der Erfindung.

Gemäß einer beispielhaften Ausführungsform des Verfahrens oder Prüfsystems sind die Anordnung aus der Mehrzahl von Lichtquellen, das Spektrometer und die Prüfkamera in einer Prüfstation integriert und in der Prüfstation in einer festen Position zueinander angeordnet.

Mit einer solche festen Position zueinander kann eine besonders genaue Messung erfolgen und damit eine genauere Kalibrierung bzw. Justierung der Komponenten.

Gemäß einer beispielhaften Ausführungsform des Verfahrens oder Prüfsystems liegt ein Messpunkt des Spektrometers in einem Bildbereich der Prüfkamera.

Damit wird sichergestellt, dass Prüfkamera und Spektrometer auf den gleichen Messpunkt justiert sind.

Gemäß einer beispielhaften Ausführungsform des Verfahrens oder Prüfsystems umfasst die Mehrzahl von Lichtquellen eine erste Lichtquelle zur Erzeugung von Licht einer ersten Farbe (R), eine zweite Lichtquelle zur Erzeugung von Licht einer zweiten Farbe (G) und eine dritte Lichtquelle zur Erzeugung von Licht einer dritten Farbe (B); und die Prüfkamera ist eine 3-Kanal Farbbildkamera zur Erzeugung von drei Farbkanälen (R, G, B).

Ein solches Prüfsystem bzw. Verfahren ist leicht zu implementieren, die Lichtquelle kann eine einfache RGB-LED sein und die Kamera eine einfach erhältliche Industrie-Farbbildkamera.

Gemäß einer beispielhaften Ausführungsform des Verfahrens oder Prüfsystems umfasst das Verfahren: Anschalten der ersten Lichtquelle zum Erzeugen von Licht der ersten Farbe (R); Erfassen eines 3-Kanal Farbbildes in dem ersten Farbraum der Prüfkamera und einer Spektroradiometermessung in dem zweiten Farbraum des Spektrometers bei angeschalteter erster Lichtquelle; Erzeugen eines Kamera-Wertes ($R_{rot}$, $G_{rot}$, $B_{rot}$) für jeden der drei Farbkanäle (R, G, B) der 3-Kanal Farbbildkamera in dem ersten Farbraum für die erste Lichtquelle; und Erzeugen eines Spektroradiometer-wertes ($X_{rot}$, $Y_{rot}$, $Z_{rot}$) des entsprechenden Farbkanals (R, G, B) der 3-Kanal Farbbildkamera in dem zweiten Farbraum für die erste Lichtquelle.

Damit kann auf einfache Weise der erste Farbraum auf den zweiten Farbraum abgebildet werden.

Gemäß einer beispielhaften Ausführungsform des Verfahrens oder Prüfsystems umfasst das Erzeugen des Kamera-Wertes ($R_{rot}$, $G_{rot}$, $B_{rot}$) für jeden der drei Farbkanäle (R, G, B) folgendes: Mitteln von Pixeln des Bildbereichs der Prüfkamera, welche innerhalb des Messpunkts des Spektrometers liegen.

Mit dem Mitteln der entsprechenden Pixel können sehr genaue, scharfe kamera-Werte erzeugt werden. Spektrometer und Prüfkamera sind hier auf denselben Messpunkt gerichtet.

Gemäß einer beispielhaften Ausführungsform des Verfahrens oder Prüfsystems umfasst das Verfahren: nach dem Anschalten der ersten Lichtquelle, sukzessives Anschalten der zweiten Lichtquelle zum Erzeugen von Licht der zweiten Farbe (G) und der dritten Lichtquelle zum Erzeugen von Licht der dritten Farbe (B); und entsprechendes Erfassen von 3-Kanal Farbbildern $R_{grün}$, $G_{grün}$, $B_{grün}$, $R_{blau}$, $G_{blau}$, $B_{blau}$ und Spektroradiometermessungen $X_{grün}$, $Y_{grün}$, $Z_{grün}$, $X_{blau}$, $Y_{blau}$, $Z_{blau}$ für die zweite Lichtquelle und die dritte Lichtquelle.

Damit können über die Vielzahl von Kameras genaue Messungen des Prüflings bestimmt werden.

Gemäß einer beispielhaften Ausführungsform des Verfahrens oder Prüfsystems umfasst das Verfahren: Bestimmen einer Spektrometermatrix $S_{RGB-LED1}$ und einer Kameramatrix $K_{RGB-LED1}$ für die erste Lichtquelle basierend auf den erfassten 3-Kanal Farbbildern und den erfassten Spektroradiometermessungen über die folgenden Beziehungen:

$$S_{\text{RGB-LED1}} = \begin{bmatrix} X_{\text{rot}} & Y_{\text{rot}} & Z_{\text{rot}} \\ X_{\text{grün}} & Y_{\text{grün}} & Z_{\text{grün}} \\ X_{\text{blau}} & Y_{\text{blau}} & Z_{\text{blau}} \end{bmatrix}, \; K_{\text{RGB-LED1}} = \begin{bmatrix} R_{\text{rot}} & G_{\text{rot}} & B_{\text{rot}} \\ R_{\text{grün}} & G_{\text{grün}} & B_{\text{grün}} \\ R_{\text{blau}} & G_{\text{blau}} & B_{\text{blau}} \end{bmatrix}$$

Mit diesen Matrizen lässt sich auf einfache Weise eine genaue Abbildung des ersten Farbraums in den zweiten Farbraum und umgekehrt realisieren.

Gemäß einer beispielhaften Ausführungsform des Verfahrens oder Prüfsystems umfasst das Verfahren: Bestimmen der Abbildung des ersten Farbraums auf den zweiten Farbraum für die erste Lichtquelle über eine Transformationsmatrix $T_{RGB-LED1}$ für die erste Lichtquelle über die Matrix-Beziehung $T = (S^T \cdot K) \cdot (K^T \cdot K)^{-1}$.

Eine solche Transformationsmatrix lässt sich leicht bestimmen.

In dieser Offenbarung werden Farbkameras, Leuchtdichtekameras, Farbleuchtdichtekameras und Hyperspektralkameras beschrieben. Farbkameras oder Farb-Leuchtdichtekameras sind bildgebende auf einen Farbraum kalibrierte Messsysteme. Mit Hilfe von Farbfiltern (meist rotierend) werden mehrere verschiedenfarbig gefilterte Bilder aufgenommen. Daher sind diese Systeme relativ langsam und die Bildaufnahme der einzelnen Bilder erfolgt zeitlich hintereinander. Da Leuchtdichtekameras mit standardisierten Lichtquellen (zum Beispiel Normlicht A, D50, D65,...) kalibriert werden, kann bei individuell zu messenden Spektren ein Messfehler trotz Kalibrierung entstehen.

Hyperspektralkameras sind bildgebende Messsysteme, die weit mehr als drei Farbkanäle besitzen und so detailliertere Spektralinformationen liefern als einfache RGB-Farbkameras. Die örtliche Auflösung bei Hyperspektralkameras ist in der Regel geringer als bei RGB-Farbkameras. Die spektrale Auflösung von Hyperspektralkameras ist um ein Vielfaches geringer als bei Spektrometern. Daher tritt bei Umrechnung der Spektralinformationen zu Norm-Helligkeits- oder Farbwerten (z.B. Lu'v'-Farbraum, Leuchtdichte L mit Farbkoordinaten u' und v') immer ein Fehler auf. Eine einfache Variante der Hyperspektralkamera ist die Multispektralkamera. Diese besitzt etwa deutlich weniger Farbkanäle pro Pixel als die "Hyper"-Variante. Farbberechnungsfehler treten hier noch stärker auf.

In dieser Offenbarung werden Spektrometer bzw. Spektroradiometer beschrieben. Spektrometer bzw. Spektroradiometer sind punktförmig messende kalibrierte Messsysteme. Diese bieten die höchste Auflösung im Wellenlängenbereich. Alle Helligkeits- und Farbwerte werden in diesem Messpunkt zu einem Wert aufsummiert. Es kann keine Helligkeits- oder Farbinformation ohne ein aufwändiges Scanning-Verfahren (zum Beispiel Spiegelumlenkung, mechanisches Verfahren, etc.) realisiert werden. Man ist jedoch frei in der Berechnung von Helligkeits- und Farbinformationen.

## Kurze Figurenbeschreibung

Im Folgenden wird die Erfindung anhand von Ausführungsbeispielen und den Figuren näher beschrieben. Es zeigen:

Fig. 1 eine schematische Darstellung eines erfindungsgemäßen Verfahrens 100 zum Bestimmen einer Abbildung eines ersten Farbraums (R, G, B) einer Prüfkamera (K) auf einen zweiten Farbraum (X, Y, Z) eines Spektrometers für die Prüfung eines Prüflings, insbesondere einer Fahrzeugkomponente;

Fig. 2 eine grafische Darstellung 200 der spektralen Empfindlichkeit einer beispielhaften Prüfkamera;

Fig. 3 eine grafische Darstellung 300 der Spektralwertfunktionen gemäß der Norm CIE 1931;

Fig. 4 eine schematische Darstellung eines beispielhaften Prüfsystems 400 mit erstem Bereich 410 zur Transformationsmatrixerzeugung und zweitem Bereich 420 zur Prüflingsvermessung entsprechend dem ersten Teilaspekt der Erfindung;

Fig. 5 eine Draufsicht auf ein beispielhaftes Prüfsystem 500 mit fest angeordneten Kameras K1 bis K8, festem Spektrometer S und einer auf einem x-y-Schienensystem verfahrbaren Kalibrierlichtquelle L entsprechend dem zweiten Teilaspekt der Erfindung;

Fig. 6 eine Seitenansicht des Prüfsystems 500 aus Figur 5 mit Spektrometer S und Kamera K1 mit Kalibrierlichtquelle L an Position 1 mit überlappendem Messbereich und verschieden angesteuerten Lichtfarben Rot, Grün, Blau;

Fig. 7 eine Draufsicht auf das Prüfsystem 500 aus Figur 5 mit Kalibrierlichtquelle L an Position 1 mit Verfahrweg 701 über alle Kameras; und

Fig. 8 einen beispielhaften Satz 800 von Testbildern (Rot, Grün, Blau) 801, 802, 803 einer RGB LED 812 hinter einer diffusen Streuscheibe mit Region 813 zum Abgleich "Kamera-zu-Spektrometer" entsprechend dem dritten Teilaspekt der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

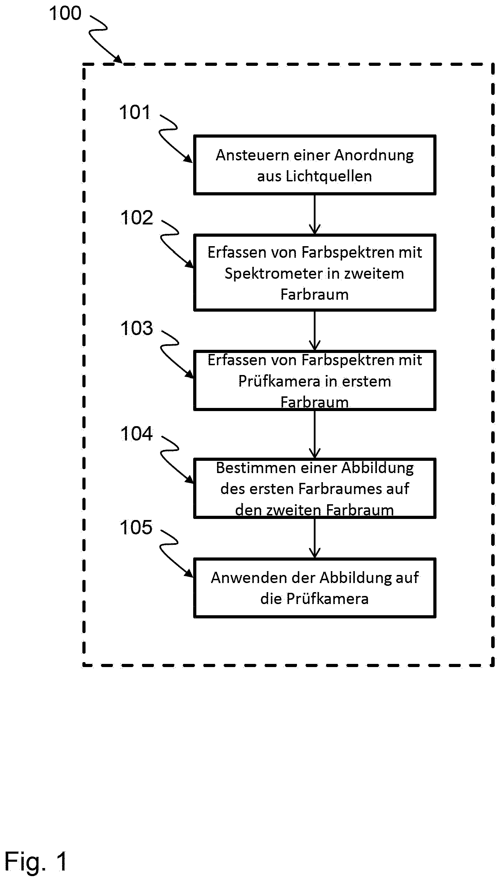

Fig. 1 zeigt eine schematische Darstellung eines erfindungsgemäßen Verfahrens 100 zum Bestimmen einer Abbildung eines ersten Farbraums (R, G, B) einer Prüfkamera (K) auf einen zweiten Farbraum (X, Y, Z) eines Spektrometers für die Prüfung eines Prüflings, insbesondere einer Fahrzeugkomponente.

Das Verfahren 100 umfasst die folgenden Schritte:

Ansteuern 101 einer Anordnung aus einer Mehrzahl von Lichtquellen zur Erzeugung eines Satzes von vordefinierten Farbspektren;

Erfassen 102 des Satzes von vordefinierten Farbspektren mit einem Spektrometer (S) in dem zweiten Farbraum (X, Y, Z);

Erfassen 103 des Satzes von vordefinierten Farbspektren mit der Prüfkamera (K) in dem ersten Farbraum (R, G, B);

Bestimmen 104 einer Abbildung des ersten Farbraums auf den zweiten Farbraum basierend auf den erfassten Sätzen von vordefinierten Farbspektren in dem zweiten Farbraum (X, Y, Z) und in dem ersten Farbraum (R, G, B); und

Anwenden 105 der Abbildung auf die Prüfkamera (K) zum Prüfen der Fahrzeugkomponente (P) in dem zweiten Farbraum (X, Y, Z).

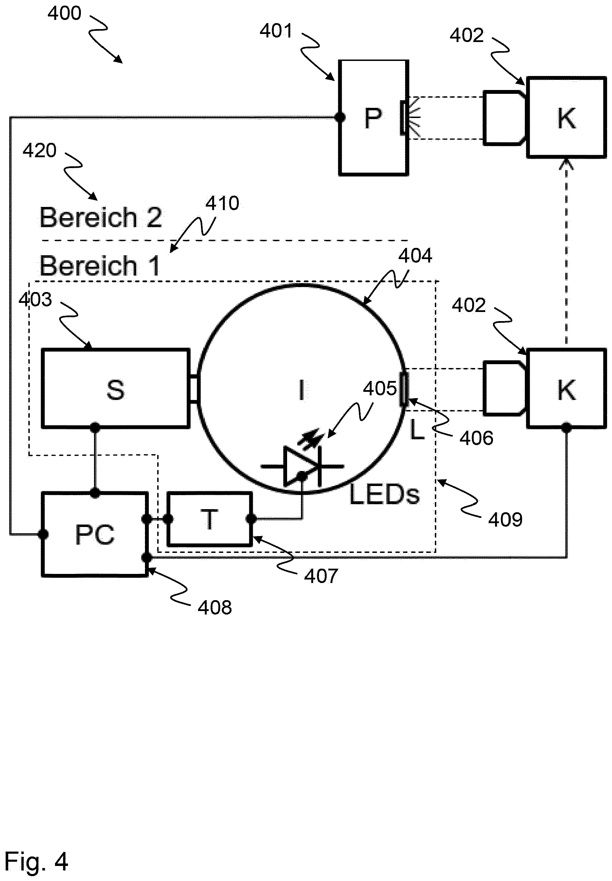

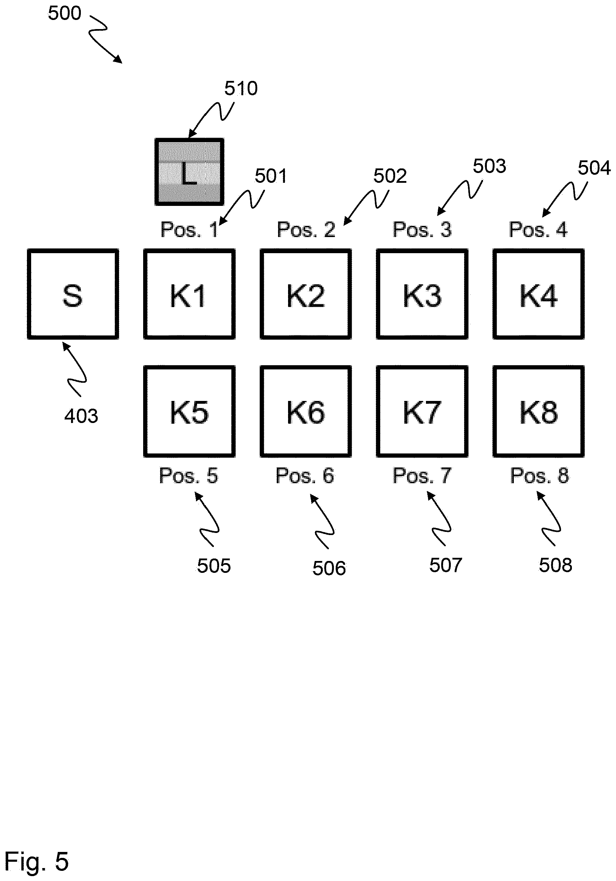

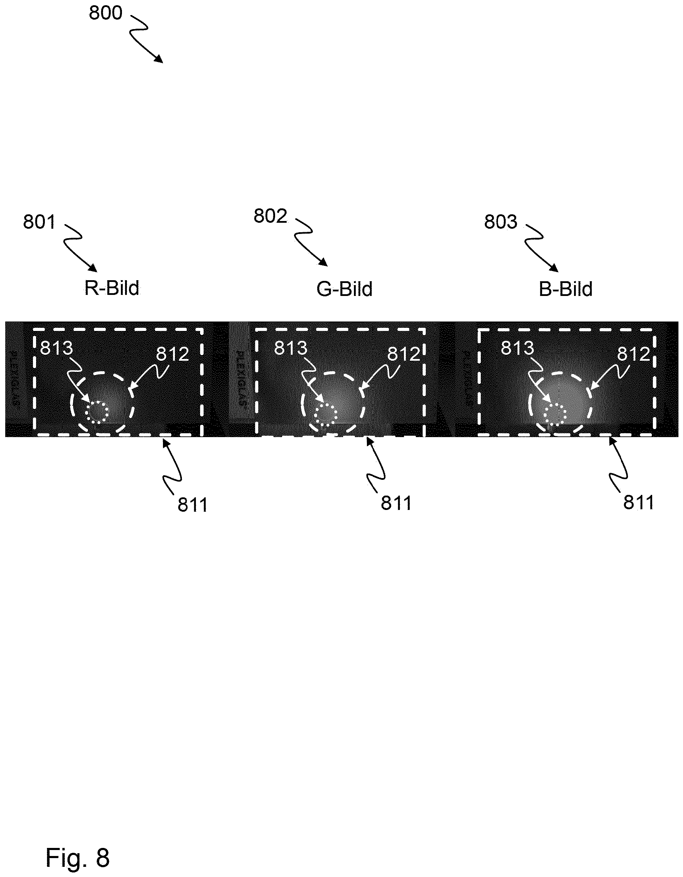

Die hier beschriebene Erfindung umfasst drei Teilaspekte. Während Figur 1 sowie die Figuren 2 und 3 das allgemeine Konzept der Erfindung darstellt, zeigt die Figur 4 den ersten Teilaspekt der Erfindung, die Figuren 5 bis 7 den zweiten Teilaspekt der Erfindung und die Figur 8 den dritten Teilaspekt der Erfindung. Alle drei Teilaspekte beruhen auf der allgemeinen Darstellung in Figur 1.

Im Folgenden wird der erste Teilaspekt anhand von Figur 1 näher beschrieben.

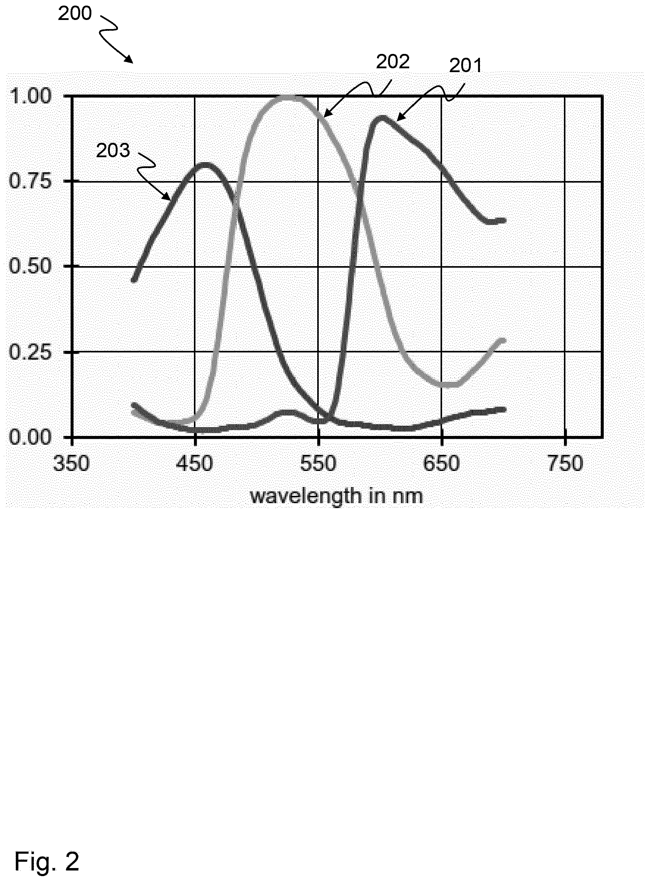

Der erste Farbraum kann ein Farbraum einer 3-Kanal Farbbildkamera zur Erzeugung von drei Farbkanälen (R, G, B) sein. Der zweite Farbraum kann ein Normalbetrachter-Farbraum (X, Y, Z) sein, wie näher zu den Figuren 2 bis 4 beschrieben.

Das Verfahren 100 kann folgenden Schritt umfassen: Positionieren der Anordnung aus der Mehrzahl von Lichtquellen 405 in einem vorgegebenen Abstand zu der Prüfkamera K, 402. Der vorgegebene Abstand zu der Prüfkamera K, 402 kann beispielsweise einem Abstand zu der von der Prüfkamera K zu prüfenden Fahrzeugkomponente P, 401 entsprechen, wie näher zu Figur 4 beschrieben.

Die Anordnung aus der Mehrzahl von Lichtquellen 405 kann in einer Ulbricht-Kugel I, 404 untergebracht sein, welche eine Lichtaustrittsfläche L, 406 aufweist, aus der Licht entsprechend dem von den Lichtquellen erzeugten Satz vordefinierter Farbspektren austritt, wie näher zu Figur 4 beschrieben.

Die Ulbricht-Kugel I, 404 und das Spektrometer S, 403 können zum Beispiel in einer Lichtbox 409 untergebracht sein, wie näher zu Figur 4 beschrieben. Das Spektrometer S, 403 kann mit der Ulbricht-Kugel I, 404 und der Lichtaustrittsfläche L der Ulbricht-Kugel I, 404 kalibriert sein, wie näher zu Figur 4 beschrieben.

Die Lichtbox 409 kann ein Lichtquellentreibermodul T, 407 zum Ansteuern der Anordnung aus der Mehrzahl von Lichtquellen 405 umfassen, wie näher zu Figur 4 beschrieben. Die Erzeugung des Satzes von vordefinierten Farbspektren kann beispielsweise basierend auf einer Ansteuerung des Lichtquellentreibermoduls T, 407 mit einem Steuerrechner PC, 408 erfolgen, wie näher zu Figur 4 beschrieben.

Die Abbildung des ersten Farbraums auf den zweiten Farbraum kann durch eine Transformationsmatrix T dargestellt werden, wie näher zu Figur 4 beschrieben.

Der erfasste Satz von vordefinierten Farbspektren in dem zweiten Farbraum (X, Y, Z) kann durch eine Spektrometer-Matrix S dargestellt werden, wie näher zu Figur 4 beschrieben. Der erfasste Satz von vordefinierten Farbspektren in dem ersten Farbraum (R, G, B) kann durch eine Kamera-Matrix K dargestellt werden, wie näher zu Figur 4 beschrieben. Die Transformationsmatrix $T$ kann sich über die Matrix-Beziehung $T = (S^T \cdot K) \cdot (K^T \cdot K)^{-1}$ bestimmen, wie näher zu Figur 4 beschrieben.

Im Folgenden wird der zweite Teilaspekt anhand von Figur 1 näher beschrieben.

Die Prüfkamera K, 402 kann eine erste Prüfkamera K1 einer Mehrzahl von Prüfkameras K1, K2, K3, K4, K5, K6, K7, K8 sein, wie näher zu den Figuren 5, 6 und 7 beschrieben. Die Anordnung aus der Mehrzahl von Lichtquellen kann eine Referenzlichtquelle L, 510 sein, wie näher zu den Figuren 5, 6 und 7 beschrieben.

Das Verfahren 100 kann ferner den folgenden Schritt umfassen: Anordnen der Referenzlichtquelle L, 510 in einer ersten Position Pos1, 501, wie näher zu den Figuren 5, 6 und 7 beschrieben, wobei in der ersten Position 501 der Referenzlichtquelle L, 510 die erste Prüfkamera K1 und das Spektrometer S, 403 Licht aus einer Lichtaustrittsfläche der Referenzlichtquelle L, 510 empfangen.

Das Verfahren 100 kann folgende Schritte umfassen: Darstellen des erfassten Satzes von vordefinierten Farbspektren in dem zweiten Farbraum (X, Y, Z) des Spektrometers S, 403 durch eine Spektrometer-Matrix $S_{Pos1}$ in Bezug auf die erste Position Pos1, 501 der Referenzlichtquelle L, 510; Darstellen des erfassten Satzes von vordefinierten Farbspektren in dem ersten Farbraum (R, G, B) der ersten Prüfkamera K1 durch eine erste Kamera-Matrix $K_{K1}$ in Bezug auf die erste Position Pos1, 501 der Referenzlichtquelle L, 510; und Bestimmen der Transformationsmatrix $T_{K1}$ der ersten Prüfkamera K1 in Bezug auf die erste Position Pos1, 501 der Referenzlichtquelle L, 510 über die Matrix-Beziehung

$$T_{K1} = \left(S_{Pos1}^T \cdot K_{K1}\right) \cdot \left(K_{K1}^T \cdot K_{K1}\right)^{-1}$$ , wie näher zu den Figuren 5, 6 und 7 beschrieben.

Das Verfahren 100 kann folgenden Schritt umfassen: Anordnen der Referenzlichtquelle L, 510 in einer zweiten Position Pos2, 502, wobei in der zweiten Position 502 der Referenzlichtquelle L, 510 eine zweite Prüfkamera K2 der Mehrzahl von Prüfkameras K1, K2, K3, K4, K5, K6, K7, K8 und das Spektrometer S, 403 Licht aus einer Lichtaustrittsfläche der Referenzlichtquelle L, 510 empfangen, wie näher zu den Figuren 5, 6 und 7 beschrieben.

Das Verfahren 100 kann folgende Schritte umfassen: Darstellen des erfassten Satzes von vordefinierten Farbspektren in dem ersten Farbraum (R, G, B) der zweiten Prüfkamera K2 durch eine zweite Kamera-Matrix $K_{K2}$ in Bezug auf die zweite Position Pos2, 502 der Referenzlichtquelle L; und Bestimmen der Transformationsmatrix $T_{K2}$ der zweiten Prüfkamera K2 in Bezug auf die zweite Position Pos2, 502 der Referenzlichtquelle L, 510 über die Matrix-Beziehung $T_{K2} = \left(S_{Pos1}^T \cdot K_{K2}\right) \left(K_{K2}^T \cdot K_{K2}\right)^{-1}$ , wie näher zu den Figuren 5, 6 und 7 beschrieben.

Das Verfahren 100 kann folgende Schritte umfassen: Anordnen der Referenzlichtquelle L, 510 in weiteren Positionen Pos3-Pos8, 503-508, wobei in den weiteren Positionen 503-508 der Referenzlichtquelle L, 510 jeweils eine weitere Prüfkamera K3, K4, K5, K6, K7, K8 der Mehrzahl von Prüfkameras K1, K2, K3, K4, K5, K6, K7, K8 und das Spektrometer S, 403 Licht aus einer Lichtaustrittsfläche der Referenzlichtquelle L, 510 empfangen; und Bestimmen der jeweiligen Transformationsmatrizen $T_{Ki}$ der weiteren Prüfkameras $K_{Ki}$ in Bezug auf die jeweils weiteren Positionen Pos3, Pos4, Pos5, Pos6, Pos7, Pos8 der Referenzlichtquelle L, 510 über die jeweilige Matrix-Beziehung

$$T_{Ki} = \left(S_{Pos1}^T \cdot K_{Ki}\right) \cdot \left(K_{Ki}^T \cdot K_{Ki}\right)^{-1}$$ , wie näher zu den Figuren 5, 6 und 7 beschrieben.

Das Verfahren 100 kann ferner die folgenden Schritte umfassen: nach dem Anordnen der Referenzlichtquelle L, 510 in den weiteren Positionen Pos3, Pos4, Pos5, Pos6, Pos7, Pos8, Anordnen der Referenzlichtquelle L, 510 in der ersten Position Pos1, 501; und Darstellen des erfassten Satzes von vordefinierten Farbspektren in dem zweiten Farbraum (X, Y, Z) des Spektrometers S, 403 durch eine Kontroll-Spektrometer-Matrix $S_{pos1,Kontrolle}$ in Bezug auf die erste Position Pos1, 501 der Referenzlichtquelle L, 510, wie näher zu den Figuren 5, 6 und 7 beschrieben.

Das Verfahren 100 kann ferner folgenden Schritt umfassen: Anzeigen eines Fehlers, falls eine Abweichung der Kontroll-Spektrometer-Matrix $S_{pos1,Kontrolle}$ von der Spektrometer-Matrix $S_{Pos1}$ einen Schwellwert überschreitet, wie näher zu den Figuren 5, 6 und 7 beschrieben.

Im Folgenden wird der dritte Teilaspekt anhand von Figur 1 näher beschrieben.

Die Anordnung aus der Mehrzahl von Lichtquellen, das Spektrometer S, 403 und die Prüfkamera K können in einer Prüfstation integriert sein und in der Prüfstation in einer festen Position zueinander angeordnet sein, wie näher zu Figur 8 beschrieben.

Ein Messpunkt 813 des Spektrometers S, 403 kann beispielsweise in einem Bildbereich 811 der Prüfkamera K liegen, wie näher zu Figur 8 beschrieben.

Die Mehrzahl von Lichtquellen kann eine erste Lichtquelle zur Erzeugung von Licht einer ersten Farbe (R), eine zweite Lichtquelle zur Erzeugung von Licht einer zweiten Farbe (G) und eine dritte Lichtquelle zur Erzeugung von Licht einer dritten Farbe (B) umfassen, wie näher zu Figur 8 beschrieben. Die Prüfkamera K kann eine 3-Kanal Farbbildkamera zur Erzeugung von drei Farbkanälen (R, G, B) sein, wie näher zu Figur 8 beschrieben.

Das Verfahren 100 kann die folgenden Schritte umfassen: Anschalten der ersten Lichtquelle zum Erzeugen von Licht der ersten Farbe (R); Erfassen eines 3-Kanal Farbbildes in dem ersten Farbraum der Prüfkamera K und einer Spektroradiometermessung in dem zweiten Farbraum (X, Y, Z) des Spektrometers S, 403 bei angeschalteter erster Lichtquelle; Erzeugen eines Kamera-Wertes ($R_{rot}$, $G_{rot}$, $B_{rot}$) für jeden der drei Farbkanäle (R, G, B) der 3-Kanal Farbbildkamera in dem ersten Farbraum (R, G, B) für die erste Lichtquelle; und Erzeugen eines Spektroradiometerwertes ($X_{rot}$, $Y_{rot}$, $Z_{rot}$) des entsprechenden Farbkanals (R, G, B) der 3-Kanal Farbbildkamera in dem zweiten Farbraum (X, Y, Z) für die erste Lichtquelle, wie näher zu Figur 8 beschrieben.

Das Erzeugen des Kamera-Wertes ($R_{rot}$, $G_{rot}$, $B_{rot}$) für jeden der drei Farbkanäle (R, G, B) kann folgendes umfassen: Mitteln von Pixeln des Bildbereichs der Prüfkamera K, welche innerhalb des Messpunkts 813 des Spektrometers S, 403 liegen, wie näher zu Figur 8 beschrieben.

Das Verfahren 100 kann folgende Schritte umfassen: nach dem Anschalten der ersten Lichtquelle, sukzessives Anschalten der zweiten Lichtquelle zum Erzeugen von Licht der zweiten Farbe (G) und der dritten Lichtquelle zum Erzeugen von Licht der dritten Farbe (B); und entsprechendes Erfassen von 3-Kanal Farbbildern $R_{grün}$, $G_{grün}$, $B_{grün}$, $R_{blau}$, $G_{blau}$, $B_{blau}$ und Spektroradiometermessungen $X_{grün}$, $Y_{grün}$, $Z_{grün}$, $X_{blau}$, $Y_{blau}$, $Z_{blau}$ für die zweite Lichtquelle und die dritte Lichtquelle, wie näher zu Figur 8 beschrieben.

Das Verfahren 100 kann folgenden Schritt umfassen: Bestimmen einer Spektrometermatrix $S_{RGB\text{-}LED1}$ und einer Kameramatrix $K_{RCS\text{-}LED1}$ für die erste Lichtquelle basierend auf den erfassten 3-Kanal Farbbildern und den erfassten Spektroradiometermessungen über die folgenden Beziehungen, wie näher zu Figur 8 beschrieben:

$$S_{RGB\text{-}LED1} = \begin{bmatrix} X_{rot} & Y_{rot} & Z_{rot} \\ X_{grün} & Y_{grün} & Z_{grün} \\ X_{blau} & Y_{blau} & Z_{blau} \end{bmatrix}, K_{RGB\text{-}LED1} = \begin{bmatrix} R_{rot} & G_{rot} & B_{rot} \\ R_{grün} & G_{grün} & B_{grün} \\ R_{blau} & G_{blau} & B_{blau} \end{bmatrix}$$

Das Verfahren 100 kann folgenden Schritt umfassen: Bestimmen der Abbildung des ersten Farbraums auf den zweiten Farbraum für die erste Lichtquelle über eine Transformationsmatrix $T_{RGB\text{-}LED1}$ für die erste Lichtquelle über die Matrix-Beziehung $T = (S^T \cdot K) \cdot (K^T \cdot K)^{-1}$, wie näher zu Figur 8 beschrieben.

Das oben beschriebene Verfahren 100 mit den drei beschriebenen Teilaspekten kann in einem Prüfsystem realisiert werden. Solch ein Prüfsystem zum Bestimmen einer Abbildung eines ersten Farbraums (R, G, B) einer Prüfkamera K auf einen zweiten Farbraum (X, Y, Z) eines Spektrometers S für die Prüfung einer Fahrzeugkomponente P in dem zweiten Farbraum (X, Y, Z) umfasst die folgenden Komponenten: eine Anordnung aus einer Mehrzahl von Lichtquellen, welche ausgebildet ist, einen Satz von vordefinierten Farbspektren zu erzeugen; ein Spektrometer S, das ausgebildet ist, den Satz von vordefinierten Farbspektren in dem zweiten Farbraum (X, Y, Z) zu erfassen; eine Prüfkamera K, die ausgebildet ist, den Satz von vordefinierten Farbspektren in dem ersten Farbraum (R, G, B) zu erfassen; und einen Steuerrechner (PC).

Der Steuerrechner ist ausgebildet, eine Abbildung des ersten Farbraums auf den zweiten Farbraum basierend auf den erfassten Sätzen von vordefinierten Farbspektren in dem zweiten Farbraum (X, Y, Z) und in dem ersten Farbraum (R, G, B) zu bestimmen; und die Abbildung auf die Prüfkamera (K) zum Prüfen der Fahrzeugkomponente (P) in dem zweiten Farbraum (X, Y, Z) anzuwenden.

Fig. 2 zeigt eine grafische Darstellung 200 der spektralen Empfindlichkeit einer beispielhaften Prüfkamera.

Eine Farb-(Industrie-)Kamera ist ein bildgebendes System mit in der Regel drei Intensitätswerten pro Pixel. Diese drei Intensitätswerte werden durch Subpixel bestimmt, die jeweils einen anderen Farbfilter im Strahlengang vor dem Subpixel haben. Es gibt verschiedene technische Systeme wie dies durchgeführt werden kann (zum Beispiel mittels Prismenkamera mit drei Spektralbändern, mehrlagigen Bildsensoren, Bayer-Sensoren).

Als Beispiel ist hier die spektrale Empfindlichkeit eines Farbsensors dargestellt. Die ausgegebene Intensität $R$, $G$, $B$ je Farbkanal der Kamera wird bestimmt über das Integral der jeweiligen Spektralverteilung $\overline{r}_{cam}(\lambda)$, $\overline{g}_{cam}(\lambda)$, $\overline{b}_{cam}(\lambda)$ der hier gezeigten Kurven im roten 201, grünen 202 und blauen 203 Bereich.

Diese Spektralverteilungen werden entsprechend verändert über weitere optische Elemente im Strahlengang, wie Vorfilter (z.B. Neutraldichte-Graufilter), Objektive, usw. Es werden für Kameraintensitätswerte eines Spektrums im folgenden immer $R$, $G$, $B$ verwendet.

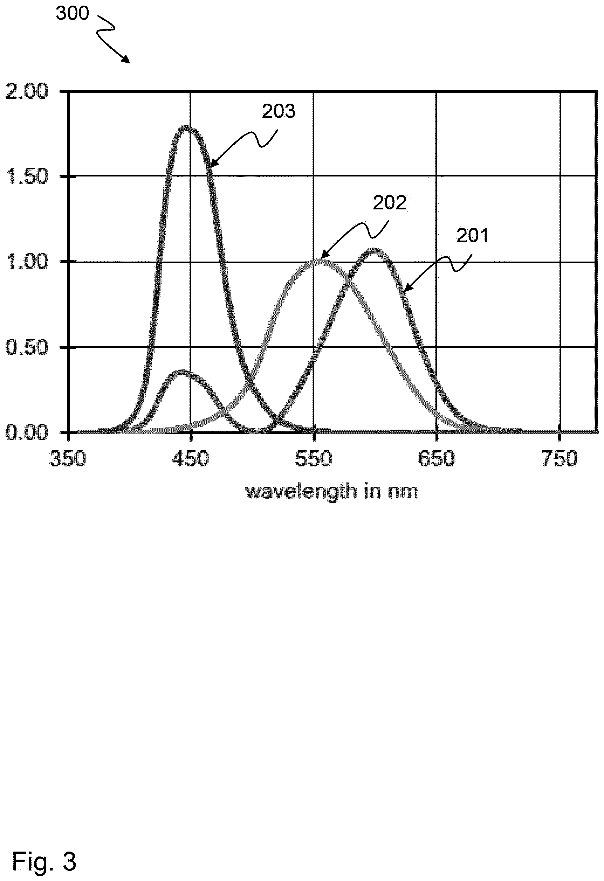

Fig. 3 zeigt eine grafische Darstellung 300 der Spektralwertfunktionen gemäß der Norm CIE 1931.

Die nach CIE 1931 definierten Spektralwertsfunktionen $\overline{x}(\lambda)$, $\overline{y}(\lambda)$, $\overline{z}(\lambda)$ ergeben nach Integration über die Wellenlänge den Normalbetrachter-Farbraum mit $X$, $Y$, $Z$ als entsprechende, wahrgenommene Tristimulus-Farbintensität.

Y entspricht dabei der menschlichen Hellempfindlichkeit bei Tageslicht. Ein Farbempfinden kann dargestellt werden, indem man die Tristimulus-Werte entsprechend in die CIE-Normfarbtafel (CIE 1931) umwandelt:

$$x = \frac{X}{X + Y + Z}$$

$$y = \frac{Y}{X + Y + Z}$$

oder in den CIELUV-Farbraum (CIE 1976) umsetzt

$$u' = \frac{4X}{X + 15Y + 3Z}$$

$$v' = \frac{9Y}{X + 15Y + 3Z}$$

Dieser stellt einen linearen Zusammenhang bei Farbunterschieden zwischen der geometrischen Darstellung und dem Empfinden dar.

Als Grundlage für die Bauteilvermessung erhält man die Kamerawerte *R, G, B,* die man nun durch lineare Transformation in *X, Y, Z* umformt, um danach in den CIELUV-Farbraum umzurechnen. Die spätere Bauteilbeurteilung soll im CIELUV erfolgen, um Farbabweichungen mit gleichen Abständen technisch genauso zu beurteilen wie über das menschliche Empfinden.

Fig. 4 zeigt eine schematische Darstellung eines beispielhaften Prüfsystems 400 mit erstem Bereich 410 zur Transformationsmatrixerzeugung und zweitem Bereich 420 zur Prüflingsvermessung entsprechend dem ersten Teilaspekt der Erfindung.

Um die linearen Umformungen von *R, G, B* zu *X, Y, Z* durchführen zu können, wie oben zu Figur 3 beschrieben, muss die kamera- und prüflingsindividuelle Transformationsmatrix T gefunden werden. Dazu wird ein Satz an ausgewählten Spektren mit der Prüfkamera und einem Spektrometer vermessen. Es wird vorausgesetzt, dass sich das später zu vermessende Spektrum (hier schmalbandige LED-Spektren im VIS-Bereich) sich dem Satz ausgewählter Spektren stark ähnelt. Es wird dazu das hier in Figur 4 dargestellte Prüfsystem 400 mit dem hier dargestellten Aufbau zur Transformationsmatrixgewinnung (Bereich 1, 410) und zur Prüflingsvermessung (Bereich 2, 420) verwendet.

Der Aufbau zur Gewinnung der Transformationsmatrix *T* (Bereich 1, 410) gliedert sich in drei wesentliche Teile: einem Mess-PC (PC, 408), einer Prüfkamera (K, 402) und einer Lichtbox 409, die sich in ein Spektrometer (S, 403), einem LED-Treibermodul (T, 407) und mehreren LEDs (LEDs, 405), die sich in einer Ulbrichtkugel (I, 404) befinden, unterteilt. Das Spektrometer (S, 403) ist mit der Ulbrichtkugel (I, 404) und derer homogenen, diffusen Lichtaustrittsfläche (L, 406) kalibriert.

Die Positionierung der Lichtbox ist so gestaltet, dass sie innerhalb des Bereichs 1, 410 bewegt werden kann und so auch in der Lage ist weitere Prüfkameras mit Transformationsmatrizen zu versehen. Der Einfachheit wegen wird im Weiteren nur der Ablauf einer Prüfkamera betrachtet.

Durch den Mess-PC (PC, 408) werden über das Treibermodul (T, 407) die so individuell einstellbaren LEDs (LEDs, 405) angesteuert, sodass ein vorher definierter Satz an i Spektren erzeugt wird. Diese Spektren werden mit dem Spektrometer (S, 403) vermessen und als $X_i$, $Y_i$, $Z_i$ hinterlegt. Es ergibt sich somit eine Spektrometermatrix S. Entsprechend werden die *R-, G-,* B-Werte der Spektren mit der Kamera (K, 402) an der Lichtaustrittsfläche (L, 406) bestimmt. Es ergibt sich eine Kameramatrix K.

$$\boldsymbol{S} = \begin{bmatrix} X_0 & Y_0 & Z_0 \\ \vdots & \vdots & \vdots \\ X_i & Y_i & Z_i \end{bmatrix}, \boldsymbol{K} = \begin{bmatrix} R_0 & G_0 & B_0 \\ \vdots & \vdots & \vdots \\ R_i & G_i & B_i \end{bmatrix}$$

Nach dem linearen Ansatz

$$\boldsymbol{S} = \boldsymbol{T} \cdot \boldsymbol{K}$$

ergibt sich die Transformationsmatrix *T* zu

$$T = \left(\boldsymbol{S}^{\mathrm{T}} \cdot \boldsymbol{K}\right) \cdot \left(\boldsymbol{K}^{\mathrm{T}} \cdot \boldsymbol{K}\right)^{-1}.$$

Im weiteren Prüfbetrieb wird die Prüfkamera (K, 402) eigenständig betrieben. Das heißt, dass die Lichtbox 409 im Prüfbetrieb nicht benötigt wird. Im konkreten Fall ist wird die Prüfkamera (K, 402) von der Lichtbox 409 zu der Prüfzelle in Bereich 2, 420 bewegt, in der sich der Prüfling (P, 401) befindet. Der Prüfling (P, 401) befindet sich in demselben Abstand zur Prüfkamera (K, 402) wie die Austrittsfläche (L, 406) der Lichtbox 409. Der Mess-PC (PC, 408) steuert den Prüfling (P, 401) und die Prüfkamera (K, 402), die nun zur Prüfung entsprechende $R_P$-, $G_P$-, $B_P$-Prüfwerte im zuvor definierten Kamerabildbereich liefert. Mit Hilfe der zuvor gewonnenen Transformationsmatrix $\boldsymbol{T}$ werden diese Werte in Prüf-Tristimulusfarbwerte $X_P$, $Y_P$, $Z_P$ umgerechnet.

$$\boldsymbol{K}_P = [R_P, G_P, B_P]$$

$$\boldsymbol{S}_P = \boldsymbol{T} \cdot \boldsymbol{K}_P$$

$$\Rightarrow \boldsymbol{S}_P = [X_P, Y_P, Z_P]$$

So kann eine weitere Verrechnung in den CIELUV-Farbraum wie oben dargestellt umgesetzt werden.

Zur Neuberechnung und Kontrolle der Transformationsmatrix $\boldsymbol{T}$ wird die Prüfkamera (K, 402) in einem festgelegten, zeitlichen Abstand wieder in den Bereich 1, 410 bewegt. So kann mit den vorgegebenen Spektren der LEDs der Lichtbox 409 und dem Spektrometer (S, 403) ein erneuter Abgleich der $R$-, $G$-, $B$- Kamerawerte stattfinden.

Fig. 5 zeigt eine Draufsicht auf ein beispielhaftes Prüfsystem 500 mit fest angeordneten Kameras K1 bis K8, festem Spektrometer S und einer auf einem x-y-Schienensystem verfahrbaren Kalibrierlichtquelle L entsprechend dem zweiten Teilaspekt der Erfindung.

Um die in Figur 3 dargestellten lineare Umformungen von R, G, B zu X, Y, Z durchführen zu können, muss die kameraindividuelle Transformationsmatrix $\boldsymbol{T}$ gefunden werden. Dazu werden mindestens drei "Prüffarben" benötigt, die jeweils in die Kamera- R, G, B - Spektralbereiche und in die X, Y, Z -Spektralbereiche fallen.

Dies trifft im Falle der Vermessung einer RGB-LED zu. Bei anderen Lichtarten (Weißlicht, etc.) sollte eine Genauigkeitsanalyse des Messsystems vorangehen.

Um optimal auf das zu prüfende Produkt die Kameras K1 bis K8 abzugleichen, wurde eine Lichtquelle ("Kalibrierlichtquelle 510) entwickelt, die baugleiche RGB-LEDs integriert hat wie das zu prüfende Produkt. Bei der Messung resultierende leichte Messschwankungen aufgrund von Farb-Binnings der Produkt-RGB-LEDs werden noch toleriert, da sie sich geringer auswirken als bei einem Kameraabgleich mit einer zum Produkt spektral fremden Lichtart (z.B. Normlicht A, D65, ...). Die Lichtquelle 510 ist so gestaltet, dass sie mit demselben Steuermodul und denselben digitalen Befehlen angesteuert werden kann wie die zu prüfenden Bauteile. Dies ermöglicht eine äußerst einfache Systemintegration. Zudem ist die "Kalibrierlichtquelle" 510 bestmöglich homogen ausgeleuchtet, um Positionierfehler zwischen den Kamerapositionen 501 bis 508 bzw. dem Spektrometer S, 403 zu kompensieren. Die "Kalibrierlichtquelle" 510 befindet sich auf einem x-y-Schienensystem und kann zwischen den einzelnen abzugleichenden Kameras K1, K2, K3, K4, K5, K6, K7, K8 verfahren werden.

Figur 5 zeigt ein beispielhaftes Prüfsystem 500 mit einer beispielhaften Anzahl von acht Kameras K1, K2, K3, K4, K5, K6, K7, K8. Es versteht sich, dass hier auch jedwede andere Anzahl an Kameras genutzt werden kann.

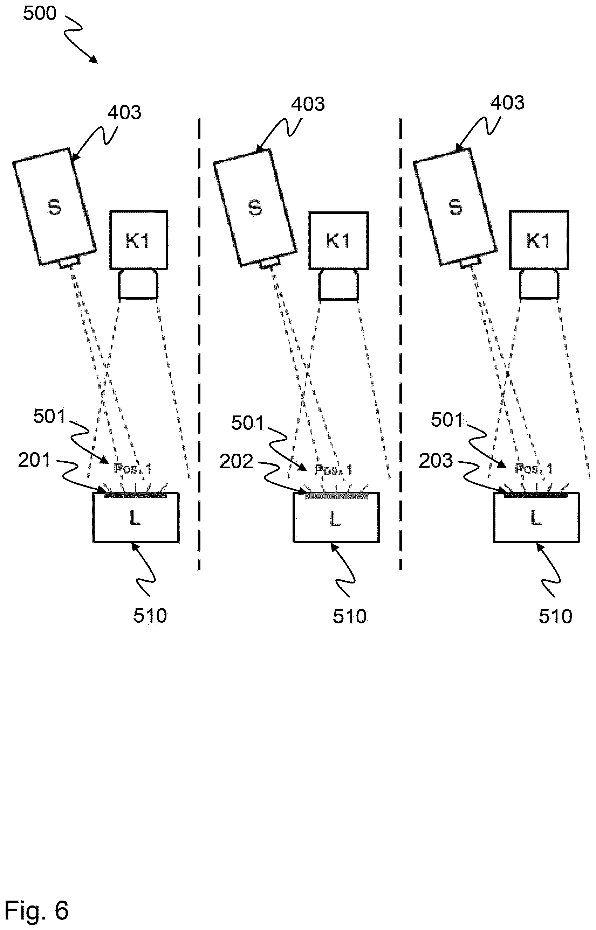

Fig. 6 zeigt eine Seitenansicht des Prüfsystems 500 aus Figur 5 mit Spektrometer S und Kamera K1 mit Kalibrierlichtquelle L an Position 1 mit überlappendem Messbereich und verschieden angesteuerten Lichtfarben Rot, Grün, Blau.

Der erste Schritt des Kameraabgleichs findet an Position 1, 501 statt. Befindet sich an dieser Stelle die "Kalibrierlichtquelle" 510, so hat das Spektrometer S, 403 und die Kamera 1 (K1) einen gemeinsamen Messfleck auf der homogen ausgestrahlten "Kalibrierlichtquelle" 510, wie in Figur 6 zu sehen. Die "Kalibrierlichtquelle" 510 wird nun angesteuert, sodass sie definiert farbiges Licht abstrahlt. Hier schematisch dargestellt in den Farben Rot (201), Grün (202) und Blau (203).

Für jede dieser Farben ergibt sich ein Messdatensatz des Spektrometers mit $\boldsymbol{S}_{\mathrm{Pos1}}$ und der Kamera K1 mit $\boldsymbol{K}_{K1}$.

$$\boldsymbol{S}_{\mathrm{Pos1}} = \begin{bmatrix} X_{\mathrm{rot}} & Y_{\mathrm{rot}} & Z_{\mathrm{rot}} \\ X_{\mathrm{grün}} & Y_{\mathrm{grün}} & Z_{\mathrm{grün}} \\ X_{\mathrm{blau}} & Y_{\mathrm{blau}} & Z_{\mathrm{blau}} \end{bmatrix}, \boldsymbol{K}_{K1} = \begin{bmatrix} R_{\mathrm{rot}} & G_{\mathrm{rot}} & B_{\mathrm{rot}} \\ R_{\mathrm{grün}} & G_{\mathrm{grün}} & B_{\mathrm{grün}} \\ R_{\mathrm{blau}} & G_{\mathrm{blau}} & B_{\mathrm{blau}} \end{bmatrix}$$

Diese sind ausreichend, um eine Umrechnung für jeden Kamerapixel von Kamera- *RGB*-Werten zu *XYZ*-Werten durchzuführen. Nach dem linearen Ansatz

$$S = T \cdot K$$

wird eine Umrechnungsmatrix $T_{K1}$ ("*RGB-zu-XYZ*") für Kamera K1 bestimmt. Diese Transformationsmatrix $T$ ergibt über

$$T_{K1} = \left(S_{Pos1}^{T} \cdot K_{K1}\right) \cdot \left(K_{Pos1}^{T} \cdot K_{K1}\right) T_{K1} = \left(S_{Pos1}^{T} \cdot K_{K1}\right) \cdot \left(K_{K1}^{T} \cdot K_{K1}\right)^{-1}.$$

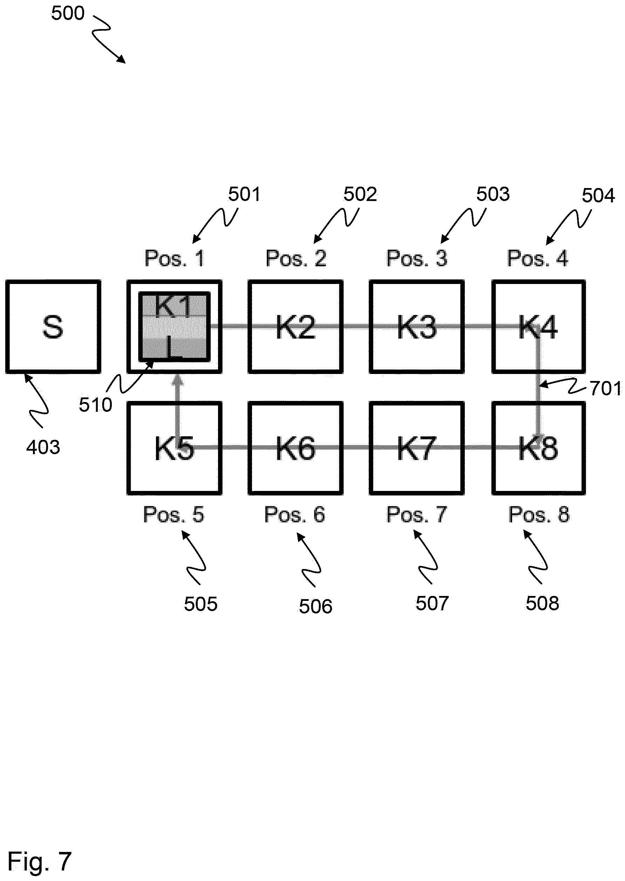

Da das Spektrometer 403 fest verbaut ist, wie die Kameras auch, können nur an einer Stelle (Position 1, 501) Messdaten mit dem Spektrometer erzeugt werden. Dies geschieht ausschließlich an Position 1, 501. Daher ist es notwendig die "Kalibrierlichtquelle" 510 in den jeweiligen Blickbereich jeder Kamera K1 bis K8 zu führen, wie in Figur 7 näher dargestellt.

Fig. 7 zeigt eine Draufsicht auf das Prüfsystem 500 aus Figur 5 mit Kalibrierlichtquelle L an Position 1 mit Verfahrweg 701 über alle Kameras.

Durch einen Nachweis über eine zeitlich konstante Abstrahlung der "Kalibrierlichtquelle" 510, geht man davon aus, dass sich das angesteuerte Licht der "Kalibrierlichtquelle" 510 infinitesimal gering ändert, während an den weiteren Kamerapositionen dieses Licht mit den Kameras vermessen wird. Man verwendet für den Abgleich der nachfolgenden Kameras K2-K8 immer denselben Spektrometerdatensatz $S_{Pos1}$ wie bei Kamera K1 an Position 1, 501. Die Datensätze der nachfolgenden Kameras ergeben sich analog wie bei Kamera K1 mit $K_{K2}$, $K_{K3}$, ... $K_{K8}$. Ebenso ergeben sich die Umrechnungsmatritzen für jede Kamera K2 bis K8 mit

$$T_{K2} = \left(S_{Pos1}^{T} \cdot K_{K2}\right) \cdot \left(K_{K2}^{T} \cdot K_{K2}\right)^{-1}$$

$$T_{K3} = \left(S_{Pos1}^{T} \cdot K_{K3}\right) \cdot \left(K_{K3}^{T} \cdot K_{K3}\right)^{-1}$$

$$...$$

$$T_{K8} = \left(S_{Pos1}^{T} \cdot K_{K8}\right) \cdot \left(K_{K8}^{T} \cdot K_{K8}\right)^{-1}$$

Mit je einer Verifizierungsmessung der angesteuerten Lichtfarben wird jeder Kameraabgleich auf Korrektheit kontrolliert. Sind alle Kamera abgeglichen, so wird die "Kalibrierlichtquelle" 510 nochmals auf Position 1, 501 gefahren und anschließend mit dem Spektrometer S, 403 nochmals vermessen. Es ergibt sich der Datensatz $S_{Pos1,Kontrolle}$. Ein Vergleich auf Abweichung der Daten $S_{Pos1}$ und $S_{Pos1,Kontrolle}$ ist als Schritt zur Freigabe des korrekten Kameraabgleichs aller Kameras implementiert. Ist dieser erfolgreich können die Kameras verwendet werden.

Die acht Umrechnungsmatrizen $T_{K1...8}$ werden bei jeder Bauteilprüfung auf das aufgenommene RGB-Kamerabild der jeweiligen Kamera angewendet. Jede der Kameras kann nun Bilder im *X, Y, Z*-Farbraum darstellen, die dann in den CIELUV-Farbraum (CIE 1976) übertragen werden können, um so nicht nur vergleichende Prüfungen an Bauteilen durchführen zu können, sondern auch absolute Messungen in einem definierten Farbraum.

Fig. 8 zeigt einen beispielhaften Satz 800 von Testbildern (Rot, Grün, Blau) 801, 802, 803 einer RGB LED 812 hinter einer diffusen Streuscheibe mit Region 813 zum Abgleich "Kamerazu-Spektrometer" entsprechend dem dritten Teilaspekt der Erfindung.

Um die linearen Umformungen von *R, G, B* zu *X, Y, Z,* wie in Figur 3 gezeigt, durchführen zu können, muss die kamera- und prüflingsindividuelle Transformationsmatrix $T$ gefunden werden. Dazu werden mindestens drei "Prüffarben" benötigt, die jeweils in die Kamera- *R, G, B*-Spektralbereiche und in die *X, Y, Z* - Spektralbereiche fallen. Dies trifft im Falle der Vermessung einer RGB-LED zu. Bei anderen Lichtarten (z.B. Weißlicht, etc.) sollte eine Genauigkeitsanalyse des Messsystems vorangehen.

Das Statuslicht der Gen6-Ladedose muss helligkeits- und farbkalibriert werden. Da bei einem helligkeits- und farbkalibrierenden Statuslicht RGB-LEDs verwendet werden, die jeweils in den Einzelfarbkanälen angesteuert und vermessen werden müssen, bietet sich dies als passendes Beispiel zur Erklärung des Farb- und Helligkeitsabgleichs für Farb-Kameras während der Bauteilprüfung an.

Die zum Kameraabgleich benötigten drei Prüffarben ergeben sich bei der Kalibrierung des Statuslichtes, da hier die verwendeten RGB-LEDs (hier drei Stück) kalibriert werden müssen.

Die Routine für die RGB-LED-Kalibrierung läuft folgendermaßen ab:

- Anschalten der LED Rot mit bekannter Bestromung, Messen der Farbe und Helligkeit,
- Wiederholung mit LED Grün,

- Wiederholung mit LED Blau.
- Zusammenfassen der Messwerte und Verrechnung in einer gegebenen Kalibriermatrix.
- Beschreiben des LED-Controllers mit den berechneten Kalibrierdaten. Der LED-Controller kann nun gegebene Farb- und Helligkeitswerte in eine entsprechende Bestromung der Einzel-LEDs (Rot, Grün, Blau) umsetzen, sodass die RGB-LED in gewünschter/angesteuerter Farbe und Helligkeit leuchtet.
- Validierungstest mit Farb- und Helligkeitsansteuerung der RGB-LED.

Für den Kameraabgleich nutzt man nun folgende Schritte der RGB-LED-Kalibrierung:

Bei der RGB-LED-Kalibrierroutine wird die rote LED der RGB-LED 812 als erstes angesteuert. Dabei nimmt man zeitgleich ein Kamerabild 811 und eine Spektroradiometermessung auf. An einem Punkt 813 (siehe Darstellung in Figur 8) im Bild 811 überlagert sich der Spektroradiometermesspunkt mit dem Kamerabild 811. Alle $R$, G, $B$-Farbwerte der Pixel innerhalb dieses Bereichs 813 werden je Farbkanal 801, 802, 803 gemittelt und es ergibt sich je ein Kamera-Wert für $R_{\text{rot}}$, $G_{\text{rot}}$ und $B_{\text{rot}}$ für die rote LED. Die entsprechenden Spektroradiometerwerte sind $X_{\text{rot}}$, $Y_{\text{rot}}$ und $Z_{\text{rot}}$.

Dasselbe wird für die beiden anderen Grund-LEDs (grün und blau) durchgeführt.

Es ergibt sich somit eine Spektrometermatrix $S$ und eine Kameramatrix $K$ für die erste RGB-LED:

$$S_{\text{RGB-LED1}} = \begin{bmatrix} X_{\text{rot}} & Y_{\text{rot}} & Z_{\text{rot}} \\ X_{\text{grün}} & Y_{\text{grün}} & Z_{\text{grün}} \\ X_{\text{blau}} & Y_{\text{blau}} & Z_{\text{blau}} \end{bmatrix}, K_{\text{RGB-LED1}} = \begin{bmatrix} R_{\text{rot}} & G_{\text{rot}} & B_{\text{rot}} \\ R_{\text{grün}} & G_{\text{grün}} & B_{\text{grün}} \\ R_{\text{blau}} & G_{\text{blau}} & B_{\text{blau}} \end{bmatrix}$$

Diese ist ausreichend, um eine Umrechnung für jeden Kamerapixel von Kamera- RGB-Werten zu $XYZ$-Werten durchzuführen. Dazu wird für diese eine RGB-LED mit ihren drei Bildaufnahmen eine Umrechnungsmatrix $T_{\text{RGB-LED1}}$ ("$RGB$-zu-$XYZ$") bestimmt.

Nach dem linearen Ansatz

$$S = T \cdot K$$

ergibt sich die Transformationsmatrix $T$ zu

$$T = \left( S^{\text{T}} \cdot K \right) \cdot \left( K^{\text{T}} \cdot K \right)^{-1}.$$

Die so gewonnene Transformationsmatrix $T_{\text{RGB-LED1}}$ ist ausschließlich gültig für die hier vermessene RGB-LED. Es werden die drei Bilder der RGB-LED nun mit $T_{\text{RGB-LED1}}$ umgerechnet und man erhält aus den drei Kamera- $RGB$-Bildern drei Kamera- $XYZ$-Bilder - ein $XYZ$-Bild für die angesteuerte rote LED, ein $XYZ$-Bild für die angesteuerte grüne LED und ein $XYZ$-Bild für die angesteuerte blaue LED.

Es müssen keine weiteren Bilder mehr aufgenommen werden, sondern man verwendet dieselben, die bereits gemacht wurden und rechnet sie nur in einen anderen Farbraum um.

Die Kamerabilder wurden bislang nur für den Abgleich "Kamera-Werte-zu-SpektroradiometerWerte" verwendet. Nun ist es möglich, für die RGB-LED-Kalibrierung jeden Messbereich in den drei $XYZ$-Bildern auszuwählen, der nötig ist um optimale Messwerte für die RGB-LED-Kalibrierung zu bestimmen. Es kann jetzt beispielsweise eine Nachführung im Bild einer Auswerteregion umgesetzt werden, die auch bei schwankenden Bauteilpositionen wiederholgenaue Messungen ermöglicht. Diese Auswerteregion liefert dann XTZ-Werte für die RGB-LED-Kalibrierung.

Somit ist es möglich, für jede der drei RGB-LEDs je eine eigene Transformationsmatrix $T_{\text{RGB-LED1}}$, $T_{\text{RGB-LED2}}$ und $T_{\text{RGB-LED3}}$ zu bestimmen und auf die jeweiligen drei Kamerabilder anzuwenden. Es ergeben sich dann drei Bilder (rote, grüne, blaue LED) für die erste RGB-LED mit Umrechnung mit der Transformationsmatrix $T_{\text{RGB-LED1}}$, drei Bilder mit der Transformationsmatrix $T_{\text{RGB-LED2}}$, und drei Bilder mit der Transformationsmatrix $T_{\text{RGB-LED3}}$, die genauere Messdaten liefern als eine Allgemein-Umrechnung aller neun Bilder mit einer einzigen Transformationsmatrix.

Dies erspart enormen Aufwand in der Positionierung bzw. Nachführung des Spektroradiometers auf immer dieselbe Messposition und kann durch Bildauswertealgorithmen stark vereinfacht werden. Man erhält hier mit der Kameraauswertung und dem Kamera-Spektroradiometerabgleich annähernd dieselben Genauigkeiten wie mit einer Spektroradiometermessung alleine. Jedoch ist man lageunabhängig und frei in der späteren Auswertung. Der Spektroradiometer-Messfleck ist ohne Kameraunterstützung sehr empfindlich auf Lageveränderungen des Bauteils und kann deshalb entsprechend schwankende Messwerte für die RGB-LED-Kalibrierung erzielen.

BEZUGSZEICHENLISTE

| | |
|---|---|
| 100 | Verfahren zum Bestimmen einer Abbildung eines ersten Farbraums auf einen zweiten Farbraum |
| 101 | Ansteuern |
| 102 | Erfassen in zweitem Farbraum |
| 103 | Erfassen in erstem Farbraum |
| 104 | Bestimmen |
| 105 | Anwenden |

| | |
|---|---|
| 200 | Darstellung der spektralen Empfindlichkeit |
| 201 | Intensität des Farbkanals R (Rot) bzw. Farbkanal R |
| 202 | Intensität des Farbkanals G (Grün) bzw. Farbkanal G |
| 203 | Intensität des Farbkanals B (Blau) bzw. Farbkanal B |

| | |
|---|---|
| 300 | Darstellung der CIE 1931 Spektralwertfunktionen |

| | |
|---|---|
| 400 | Prüfsystem mit erstem Bereich 410 zur Transformationsmatrixerzeugung und zweitem Bereich 420 zur Prüflingsvermessung |
| 410 | erster Bereich zur Transformationsmatrixerzeugung |
| 420 | zweiter Bereich zur Prüflingsvermessung |
| 401 | Prüfling P bzw. Fahrzeugkomponente |
| 402 | Prüfkamera K |
| 403 | Spektrometer S bzw. Spektroradiometer |
| 404 | Ulbrichtkugel I |
| 405 | Lichtquellen bzw. LEDs |
| 406 | Lichtaustrittsfläche L der Ulbrichtkugel I |
| 407 | Treibermodul T bzw. LED-Treibermodul |
| 408 | Steuerrechner bzw. PC |
| 409 | Lichtbox |

| | |
|---|---|
| 500 | Prüfsystem mit fest angeordneten Kameras K1 bis K8, festem Spektrometer S und einer auf einem x-y-Schienensystem verfahrbaren Kalibrierlichtquelle L |
| 501-508 | feste Positionen 1 bis 8 |
| 510 | Lichtquelle L bzw. Kalibrierlichtquelle oder Referenzlichtquelle |
| 701 | Verfahrweg der Kalibrierlichtquelle L |

| | |
|---|---|
| 800 | Satz von Testbildern |
| 801 | R-Bild bzw. Testbild in Rot |
| 802 | G-Bild bzw. Testbild in Grün |
| 803 | B-Bild bzw. Testbild in Blau |
| 811 | Kamerabild |
| 812 | Bildbereich der LED in dem Kamerabild |
| 813 | Abgleichregion zum Abgleich "Kamera-zu-Spektrometer" |

**Patentansprüche**

1. Verfahren (100) zum Bestimmen einer Abbildung eines ersten Farbraums (R, G, B) einer Prüfkamera (K) auf einen zweiten Farbraum (X, Y, Z) eines Spektrometers (S) für die Prüfung einer Fahrzeugkomponente (P) in dem zweiten Farbraum (X, Y, Z), wobei das Verfahren (100) folgende Schritte umfasst:

   Ansteuern (101) einer Anordnung aus einer Mehrzahl von Lichtquellen zur Erzeugung eines Satzes von vordefinierten Farbspektren;
   Erfassen (102) des Satzes von vordefinierten Farbspektren mit einem Spektrometer (S) in dem zweiten Farbraum (X, Y, Z);
   Erfassen (103) des Satzes von vordefinierten Farbspektren mit der Prüfkamera (K) in dem ersten Farbraum (R, G, B);

Bestimmen (104) einer Abbildung des ersten Farbraums auf den zweiten Farbraum basierend auf den erfassten Sätzen von vordefinierten Farbspektren in dem zweiten Farbraum (X, Y, Z) und in dem ersten Farbraum (R, G, B); und

Anwenden (105) der Abbildung auf die Prüfkamera (K) zum Prüfen der Fahrzeugkomponente (P) in dem zweiten Farbraum (X, Y, Z).

2.  Verfahren (100) nach Anspruch 1,

    wobei der erste Farbraum ein Farbraum einer 3-Kanal Farbbildkamera zur Erzeugung von drei Farbkanälen (R, G, B) ist; und
    wobei der zweite Farbraum ein Normalbetrachter-Farbraum (X, Y, Z) ist.

3.  Verfahren (100) nach Anspruch 1 oder 2, mit:

    Positionieren der Anordnung aus der Mehrzahl von Lichtquellen (405) in einem vorgegebenen Abstand zu der Prüfkamera (K, 402);
    wobei der vorgegebene Abstand zu der Prüfkamera (K, 402) einem Abstand zu der von der Prüfkamera (K) zu prüfenden Fahrzeugkomponente (P, 401) entspricht.

4.  Verfahren (100) nach einem der vorstehenden Ansprüche,
    wobei die Anordnung aus der Mehrzahl von Lichtquellen (405) in einer Ulbricht-Kugel (I, 404) untergebracht ist, welche eine Lichtaustrittsfläche (L, 406) aufweist, aus der Licht entsprechend dem von den Lichtquellen erzeugten Satz vordefinierter Farbspektren austritt.

5.  Verfahren nach Anspruch 4,

    wobei die Ulbricht-Kugel (I, 404) und das Spektrometer (S, 403) in einer Lichtbox (409) untergebracht sind; und
    wobei das Spektrometer (S, 403) mit der Ulbricht-Kugel (I, 404) und der Lichtaustrittsfläche (L) der Ulbricht-Kugel (I, 404) kalibriert ist.

6.  Verfahren nach Anspruch 5,

    wobei die Lichtbox (409) ein Lichtquellentreibermodul (T, 407) zum Ansteuern der Anordnung aus der Mehrzahl von Lichtquellen (405) umfasst; und
    wobei die Erzeugung des Satzes von vordefinierten Farbspektren basierend auf einer Ansteuerung des Lichtquellentreibermoduls (T, 407) mit einem Steuerrechner (PC, 408) erfolgt.

7.  Verfahren (100) nach einem der vorstehenden Ansprüche,
    wobei die Abbildung des ersten Farbraums auf den zweiten Farbraum durch eine Transformationsmatrix T dargestellt wird.

8.  Verfahren (100) nach Anspruch 7,

    wobei der erfasste Satz von vordefinierten Farbspektren in dem zweiten Farbraum (X, Y, Z) durch eine Spektrometer-Matrix $S$ dargestellt wird;
    wobei der erfasste Satz von vordefinierten Farbspektren in dem ersten Farbraum (R, G, B) durch eine Kamera-Matrix $K$ dargestellt wird; und
    wobei die Transformationsmatrix $T$ sich über die Matrix-Beziehung $T = (S^T \cdot K) \cdot (K^T \cdot K)^{-1}$ bestimmt.

9.  Prüfsystem (400, 500) zum Bestimmen einer Abbildung eines ersten Farbraums (R, G, B) einer Prüfkamera (K) auf einen zweiten Farbraum (X, Y, Z) eines Spektrometers (S) für die Prüfung einer Fahrzeugkomponente (P) in dem zweiten Farbraum (X, Y, Z), wobei das Prüfsystem (200) folgendes umfasst:

    eine Anordnung aus einer Mehrzahl von Lichtquellen, welche ausgebildet ist, einen Satz von vordefinierten Farbspektren zu erzeugen;
    ein Spektrometer (S), das ausgebildet ist, den Satz von vordefinierten Farbspektren in dem zweiten Farbraum (X, Y, Z) zu erfassen;
    eine Prüfkamera (K), die ausgebildet ist, den Satz von vordefinierten Farbspektren in dem ersten Farbraum (R, G, B) zu erfassen; und

einen Steuerrechner (PC), der ausgebildet ist, eine Abbildung des ersten Farbraums auf den zweiten Farbraum basierend auf den erfassten Sätzen von vordefinierten Farbspektren in dem zweiten Farbraum (X, Y, Z) und in dem ersten Farbraum (R, G, B) zu bestimmen; und die Abbildung auf die Prüfkamera (K) zum Prüfen der Fahrzeugkomponente (P) in dem zweiten Farbraum (X, Y, Z) anzuwenden.

10. Verfahren (100) nach Anspruch 1,

wobei die Prüfkamera (K, 402) eine erste Prüfkamera (K1) einer Mehrzahl von Prüfkameras (K1, K2, K3, K4, K5, K6, K7, K8) ist; und
wobei die Anordnung aus der Mehrzahl von Lichtquellen eine Referenzlichtquelle (L, 510) ist.

11. Verfahren (100) nach Anspruch 10, umfassend:
Anordnen der Referenzlichtquelle (L, 510) in einer ersten Position (Pos1, 501), wobei in der ersten Position (501) der Referenzlichtquelle (L, 510) die erste Prüfkamera (K1) und das Spektrometer (S, 403) Licht aus einer Lichtaustrittsfläche der Referenzlichtquelle (L, 510) empfangen.

12. Verfahren (100) nach Anspruch 11, umfassend:

Darstellen des erfassten Satzes von vordefinierten Farbspektren in dem zweiten Farbraum (X, Y, Z) des Spektrometers (S) durch eine Spektrometer-Matrix $\boldsymbol{S}_{\mathrm{Pos1}}$ in Bezug auf die erste Position (Pos1, 501) der Referenzlichtquelle (L, 510);
Darstellen des erfassten Satzes von vordefinierten Farbspektren in dem ersten Farbraum (R, G, B) der ersten Prüfkamera (K1) durch eine erste Kamera-Matrix $\boldsymbol{K}_{\mathrm{K1}}$ in Bezug auf die erste Position (Pos1, 501) der Referenzlichtquelle (L, 510); und
Bestimmen der Transformationsmatrix $\boldsymbol{T}_{\mathrm{K1}}$ der ersten Prüfkamera (K1) in Bezug auf die erste Position (Pos1, 501) der Referenzlichtquelle (L, 510) über die Matrix-Beziehung

$$\boldsymbol{T}_{\mathrm{K1}} = \left(\boldsymbol{S}_{\mathrm{Pos1}}^{\mathrm{T}} \cdot \boldsymbol{K}_{\mathrm{K1}}\right) \cdot \left(\boldsymbol{K}_{\mathrm{K1}}^{\mathrm{T}} \cdot \boldsymbol{K}_{\mathrm{K1}}\right)^{-1}.$$

13. Verfahren (100) nach Anspruch 12, umfassend:
Anordnen der Referenzlichtquelle (L, 510) in einer zweiten Position (Pos2, 502), wobei in der zweiten Position (502) der Referenzlichtquelle (L, 510) eine zweite Prüfkamera (K2) der Mehrzahl von Prüfkameras (K1, K2, K3, K4, K5, K6, K7, K8) und das Spektrometer (S, 403) Licht aus einer Lichtaustrittsfläche der Referenzlichtquelle (L, 510) empfangen.

14. Verfahren (100) nach Anspruch 13, mit:

Darstellen des erfassten Satzes von vordefinierten Farbspektren in dem ersten Farbraum (R, G, B) der zweiten Prüfkamera (K2) durch eine zweite Kamera-Matrix $\boldsymbol{K}_{\mathrm{K2}}$ in Bezug auf die zweite Position (Pos2, 502) der Referenzlichtquelle (L); und
Bestimmen der Transformationsmatrix $\boldsymbol{T}_{\mathrm{K2}}$ der zweiten Prüfkamera (K2) in Bezug auf die zweite Position (Pos2, 502) der Referenzlichtquelle (L, 510) über die Matrix-Beziehung

$$\boldsymbol{T}_{\mathrm{K2}} = \left(\boldsymbol{S}_{\mathrm{Pos1}}^{\mathrm{T}} \cdot \boldsymbol{K}_{\mathrm{K2}}\right) \cdot \left(\boldsymbol{K}_{\mathrm{K2}}^{\mathrm{T}} \cdot \boldsymbol{K}_{\mathrm{K2}}\right)^{-1}.$$

15. Verfahren (100) nach Anspruch 14, umfassend:

Anordnen der Referenzlichtquelle (L, 510) in weiteren Positionen (Pos3-Pos8, 503-508), wobei in den weiteren Positionen (503-508) der Referenzlichtquelle (L, 510) jeweils eine weitere Prüfkamera (K3, K4, K5, K6, K7, K8) der Mehrzahl von Prüfkameras (K1, K2, K3, K4, K5, K6, K7, K8) und das Spektrometer (S, 403) Licht aus einer Lichtaustrittsfläche der Referenzlichtquelle (L, 510) empfangen; und
Bestimmen der jeweiligen Transformationsmatrizen $\boldsymbol{T}_{\mathrm{Ki}}$ der weiteren Prüfkameras (K$_{\mathrm{i}}$) in Bezug auf die jeweils weiteren Positionen (Pos3, Pos4, Pos5, Pos6, Pos7, Pos8) der Referenzlichtquelle (L) über die jeweilige Matrix-

Beziehung $\boldsymbol{T}_{\mathrm{Ki}} = \left(\boldsymbol{S}_{\mathrm{Pos1}}^{\mathrm{T}} \cdot \boldsymbol{K}_{\mathrm{Ki}}\right) \cdot \left(\boldsymbol{K}_{\mathrm{Ki}}^{\mathrm{T}} \cdot \boldsymbol{K}_{\mathrm{Ki}}\right)^{-1}$.

**16.** Verfahren (100) nach Anspruch 15, umfassend:

nach dem Anordnen der Referenzlichtquelle (L, 510) in den weiteren Positionen (Pos3, Pos4, Pos5, Pos6, Pos7, Pos8), Anordnen der Referenzlichtquelle (L, 510) in der ersten Position (Pos1, 501); und
Darstellen des erfassten Satzes von vordefinierten Farbspektren in dem zweiten Farbraum (X, Y, Z) des Spektrometers (S) durch eine Kontroll-Spektrometer-Matrix $\mathbf{S}_{\text{Pos1,Kontrolle}}$ in Bezug auf die erste Position (Pos1, 501) der Referenzlichtquelle (L, 510).

**17.** Verfahren (100) nach Anspruch 16, umfassend:
Anzeigen eines Fehlers, falls eine Abweichung der Kontroll-Spektrometer-Matrix $\mathbf{S}_{\text{Pos1,Kontrolle}}$ von der Spektrometer-Matrix $\mathbf{S}_{\text{Pos1}}$ einen Schwellwert überschreitet.

**18.** Verfahren (100) nach Anspruch 1,
wobei die Anordnung aus der Mehrzahl von Lichtquellen, das Spektrometer (S) und die Prüfkamera (K) in einer Prüfstation integriert sind und in der Prüfstation in einer festen Position zueinander angeordnet sind.

**19.** Verfahren (100) nach Anspruch 18,
wobei ein Messpunkt (813) des Spektrometers (S) in einem Bildbereich (811) der Prüfkamera (K) liegt.

**20.** Verfahren (100) nach Anspruch 19,

wobei die Mehrzahl von Lichtquellen eine erste Lichtquelle zur Erzeugung von Licht einer ersten Farbe (R), eine zweite Lichtquelle zur Erzeugung von Licht einer zweiten Farbe (G) und eine dritte Lichtquelle zur Erzeugung von Licht einer dritten Farbe (B) umfasst; und
wobei die Prüfkamera (K) eine 3-Kanal Farbbildkamera zur Erzeugung von drei Farbkanälen (R, G, B) ist.

**21.** Verfahren (100) nach Anspruch 20, umfassend:

Anschalten der ersten Lichtquelle zum Erzeugen von Licht der ersten Farbe (R);
Erfassen eines 3-Kanal Farbbildes in dem ersten Farbraum der Prüfkamera (K) und einer Spektroradiometermessung in dem zweiten Farbraum (X, Y, Z) des Spektrometers (S) bei angeschalteter erster Lichtquelle;
Erzeugen eines Kamera-Wertes ($R_{\text{rot}}$, $G_{\text{rot}}$, $B_{\text{rot}}$) für jeden der drei Farbkanäle (R, G, B) der 3-Kanal Farbbildkamera in dem ersten Farbraum (R, G, B) für die erste Lichtquelle; und
Erzeugen eines Spektroradiometerwertes ($X_{\text{rot}}$, $Y_{\text{rot}}$, $Z_{\text{rot}}$) des entsprechenden Farbkanals (R, G, B) der 3-Kanal Farbbildkamera in dem zweiten Farbraum (X, Y, Z) für die erste Lichtquelle.

**22.** Verfahren (100) nach Anspruch 21, wobei das Erzeugen des Kamera-Wertes ($R_{\text{rot}}$, $G_{\text{rot}}$, $B_{\text{rot}}$) für jeden der drei Farbkanäle (R, G, B) folgendes umfasst:
Mitteln von Pixeln des Bildbereichs der Prüfkamera (K), welche innerhalb des Messpunkts (813) des Spektrometers (S) liegen.

**23.** Verfahren (100) nach Anspruch 22, umfassend:

nach dem Anschalten der ersten Lichtquelle, sukzessives Anschalten der zweiten Lichtquelle zum Erzeugen von Licht der zweiten Farbe (G) und der dritten Lichtquelle zum Erzeugen von Licht der dritten Farbe (B); und
entsprechendes Erfassen von 3-Kanal Farbbildern $R_{\text{grün}}$, $G_{\text{grün}}$, $B_{\text{grün}}$, $R_{\text{blau}}$, $G_{\text{blau}}$, $B_{\text{blau}}$ und Spektroradiometermessungen $X_{\text{grün}}$, $Y_{\text{grün}}$, $Z_{\text{grün}}$, $X_{\text{blau}}$, $Y_{\text{blau}}$, $Z_{blau}$ für die zweite Lichtquelle und die dritte Lichtquelle.

**24.** Verfahren (100) nach Anspruch 23, umfassend:
Bestimmen einer Spektrometermatrix $\mathbf{S}_{\text{RGB-LED1}}$ und einer Kameramatrix $\mathbf{K}_{\text{RCS-LED1}}$ für die erste Lichtquelle basierend auf den erfassten 3-Kanal Farbbildern und den erfassten Spektroradiometermessungen über die folgenden Beziehungen:

$$\mathbf{S}_{\text{RGB-LED1}} = \begin{bmatrix} X_{\text{rot}} & Y_{\text{rot}} & Z_{\text{rot}} \\ X_{\text{grün}} & Y_{\text{grün}} & Z_{\text{grün}} \\ X_{\text{blau}} & Y_{\text{blau}} & Z_{\text{blau}} \end{bmatrix}, \mathbf{K}_{\text{RGB-LED1}} = \begin{bmatrix} R_{\text{rot}} & G_{\text{rot}} & B_{\text{rot}} \\ R_{\text{grün}} & G_{\text{grün}} & B_{\text{grün}} \\ R_{\text{blau}} & G_{\text{blau}} & B_{\text{blau}} \end{bmatrix}$$

**25.** Verfahren (100) nach Anspruch 24, umfassend:

Bestimmen der Abbildung des ersten Farbraums auf den zweiten Farbraum für die erste Lichtquelle über eine Transformationsmatrix $T_{\text{RGB-LED1}}$ für die erste Lichtquelle über die Matrix-Beziehung $T = (S^T \cdot K) \cdot (K^T \cdot K)^{-1}$.

100

101

Ansteuern einer Anordnung
aus Lichtquellen

102

Erfassen von Farbspektren mit
Spektrometer in zweitem
Farbraum

103

Erfassen von Farbspektren mit
Prüfkamera in erstem
Farbraum

104

Bestimmen einer Abbildung
des ersten Farbraumes auf
den zweiten Farbraum

105

Anwenden der Abbildung auf
die Prüfkamera

Fig. 1

Fig. 2

Fig. 3

Fig. 4

500

510

L

| Pos. 1 | Pos. 2 | Pos. 3 | Pos. 4 |
501 502 503 504

| S | K1 | K2 | K3 | K4 |

403

| K5 | K6 | K7 | K8 |

Pos. 5 Pos. 6 Pos. 7 Pos. 8

505 506 507 508

Fig. 5

Fig. 6

500

501    502    503    504

Pos. 1    Pos. 2    Pos. 3    Pos. 4

S    K1    K2    K3    K4

510    L

403    701

K5    K6    K7    K8

Pos. 5    Pos. 6    Pos. 7    Pos. 8

505    506    507    508

Fig. 7

Fig. 8

Europäisches
Patentamt

European
Patent Office

Office européen
des brevets

# EUROPÄISCHER RECHERCHENBERICHT

Nummer der Anmeldung

EP 24 15 7501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | JP 2015 178995 A (OPUTOKOMU KK)<br>8. Oktober 2015 (2015-10-08)<br>* Absätze [0028], [0030] - [0036],<br>[0068] - [0080]; Abbildungen 1-4 *<br>- - - - - | 1-16,<br>18-25<br>17 | INV.<br>G01J3/46<br>G01J3/10<br>G01M11/02<br>G01M17/00 |
| X | US 2014/300753 A1 (YIN YE [US] ET AL)<br>9. Oktober 2014 (2014-10-09)<br>* Absätze [0036] - [0044]; Abbildungen 1,<br>2 *<br>- - - - - | 1,2,7-9,<br>19 | |
| X | DE 10 2021 134569 A1 (INSTR SYSTEMS GMBH<br>[DE]) 29. Juni 2023 (2023-06-29)<br>* Absätze [0032], [0039], [0041] -<br>[0047]; Abbildung 1 *<br>- - - - - | 1,2,7-9,<br>19 | |

RECHERCHIERTE
SACHGEBIETE (IPC)

G01J
G01M
G03B

Der vorliegende Recherchenbericht wurde für alle Patentansprüche erstellt

| Recherchenort | Abschlußdatum der Recherche | Prüfer |
|---|---|---|
| München | 5. Juli 2024 | Haan, Martine |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 24 15 7501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2024

| Im Recherchenbericht angeführtes Patentdokument | Datum der Veröffentlichung | Mitglied(er) der Patentfamilie | Datum der Veröffentlichung |
|---|---|---|---|
| JP 2015178995 A | 08-10-2015 | KEINE | |
| US 2014300753 A1 | 09-10-2014 | US 2014300753 A1 | 09-10-2014 |
| | | US 2019120694 A1 | 25-04-2019 |
| DE 102021134569 A1 | 29-06-2023 | DE 102021134569 A1 | 29-06-2023 |
| | | WO 2023118478 A2 | 29-06-2023 |

EPO FORM P0461

Für nähere Einzelheiten zu diesem Anhang : siehe Amtsblatt des Europäischen Patentamts, Nr.12/82